(19) **Europäisches Patentamt / European Patent Office / Office européen des brevets**

(11) **EP 1 665 957 B1**

(12) **EUROPEAN PATENT SPECIFICATION**

(45) Date of publication and mention
of the grant of the patent:
**20.08.2008 Bulletin 2008/34**

(21) Application number: **03818308.3**

(22) Date of filing: **26.08.2003**

(51) Int Cl.:
*A47C 27/12* (2006.01)    *B68G 3/00* (2006.01)
*B68G 7/00* (2006.01)    *D04H 3/16* (2006.01)

(86) International application number:
**PCT/JP2003/010798**

(87) International publication number:
**WO 2005/018386 (03.03.2005 Gazette 2005/09)**

(54) **CUSHION MATERIAL FORMED OF SPRING-STRUCTURED RESIN-MOLDED PRODUCT, MANUFACTURING METHOD FOR THE CUSHION MATERIAL, AND MOLD USED FOR THE MANUFACTURING METHOD**

AUS FEDERNDEM, HARZGEFORMTEM PRODUKT GEBILDETES POLSTERMATERIAL, HERSTELLUNGSVERFAHREN FÜR DAS POLSTERMATERIAL UND FÜR DAS HERSTELLUNGSVERFAHREN VERWENDETE FORM

MATERIAU DE COUSSIN FORME DE PRODUIT DE RESINE MOULEE A STRUCTURE DE RESSORT, PROCEDE DE FABRICATION POUR LE MATERIAU DE COUSSIN, ET MOULE UTILISE POUR LE PROCEDE DE FABRICATION

(84) Designated Contracting States:
**DE ES FR GB IT**

(43) Date of publication of application:
**07.06.2006 Bulletin 2006/23**

(73) Proprietor: **EIN CO., LTD. TECHNICAL CENTER Motosu-Gun, Gifu 501-0215 (JP)**

(72) Inventors:
• **NISHIBORI, Sadao,**
c/o Ein Engineering Co., Ltd
Tokyo 141-0031 (JP)
• **KOBAYASHI, Tatsumi**
Kawagoe-shi, Saitama 350-1162 (JP)

• **SHIRAI, Maki,**
c/o Ein Engineering Co., Ltd
Tokyo 141-0031 (JP)
• **NAKAMURA, Yuichiro,**
c/o Ein Engineering Co., Ltd
Tokyo 141-0031 (JP)

(74) Representative: **Valea AB
Lindholmspiren 5
417 56 Göteborg (SE)**

(56) References cited:
**EP-A- 1 182 286        EP-A2- 0 344 365
JP-A- 8 061 410        JP-A- 8 061 413
JP-A- 8 061 414        JP-A- 9 038 358
JP-A- 10 128 890        US-A- 5 492 662**

EP 1 665 957 B1

**Description**

## BACKGROUND OF THE INVENTION

1.Technical Field

The present invention relates to a cushion material composed of a resin molded article having a spring structure, method of producing the same, and dies used in manufacture of the cushion material, more particularly to a method for producing a resin molded article with a spring structure which is excellent in shock resistance and load capacity, and has an ability to meet specific and non-specific needs in terms of shape and size in various industrial fields, that is, a material suitably used for producing any supports on which one can sit, rest or mount such as seats of automotive vehicles, motor cycles, bicycles, electric trains, and aircraft, saddles for horse riding, chairs, sofas and beds, and to a method for producing a cushion material which requires a low cost and burden for its disposal, and low production cost by simplifying production facilities, and improves the precision of molding, and apparatuses necessary for producing the cushion material.

2. Background Art

At present, a polyurethane foam is a mainstream material of cushions for seats and beds of automotive vehicles, motor cycles, bicycles, electric trains and aircraft, An example of this is disclosed in US-A-5 492 662. Generally, cushions are used in some form or another in any supports on which one can sit, rest or mount regardless of whether they are exposed to vibrations during use or not. Indeed, polyurethane foam is widely used in various applications, and the wide spread of this material is ascribed to its being comparatively free from problems in production and cost.

One of such cushion materials is disclosed, for example, in Japanese Patent No. 2995325 which proposes a cushion pad for the seat of automobiles. Of the cushion pad in question, a seat surface part is formed of a high resilience foam having a one layer structure, and the high resilience foam is made of a polyurethane foam which contains 10 wt% or less oftolylene diisocyanate (TDI), and the remainder isocyanate formed by diphenylmethane diisocyanate. Japanese Patent No. 2548477 proposes a cushion structure obtained by fusing polyester fibers with a high melting point to each other via a thermoplastic elastomer with a low melting point. A cushion is proposed in Japanese Laid-Open Patent Publication (Kokai) No. 2000-51011, which is obtained by partially bonding synthetic fibers and natural fibers of 1 to 20 deniers with each other, via a synthetic rubber adhesive or cross-linking polyurethane.

Generally, when a man sits on a seat made of polyurethane foam, his weight tends to concentrate in one point so much that polyurethane foam beneath the point sinks deeply. Thus, his balance becomes unstable, and he gets fatigued if he sits on the seat for a long time. The main reason for this is as follows. Manufacture of a product of a polyurethane foam is achieved by placing a foaming material in a mold, and foaming the material uniformly, to give a product uniform in density and strength. With this manufacture it is difficult to obtain a product of which parts are modified in density and strength according to the functions they are assigned. Furthermore, because polyurethane foam is so soft and elastic that, when man rests his weight on a seat made of polyurethane foam, he feels an upward thrust on his buttock, touching on a hard bottom, and vertical swing, and his feet may become numb and strongly tired if he rests on the seat for a long time. Take a polyurethane seat for a car or motorcycle as an example. Demands with regard to the manufacture and structure of such a polyurethane seat are manifold, but the material itself is so uniform in density that, when a man sits on the seat, the distribution of pressures on the sitting surface changes from moment to moment, and thus polyurethane foam may not be suitable according to given functions assigned to the seat. Manufacture of products of a polyurethane foam is generally achieved via blow foaming, and thus the product has a uniform spring property, or is conferred a number of roughly different spring properties. Therefore, it is difficult for the product of polyurethane foam to change its spring properties in accordance with given requirements. The seat of a motor cycle must change its spring property according to the type of motor cycle, e.g., according to whether the motor cycle is for touring, road racing or motocross, or to the rider's posture during riding. As it is, because the seat cannot change its spring property according to the type of motor cycle or to the rider's posture, the rider must put or lift his weight on or off the seat as needed during racing, which, when repeated often over a long time, will cause the overall center of gravity to be elevated and unbalanced.

Further, it is difficult to recycle polyurethane foams since they are thermosetting resins. Therefore, polyurethane foams can only be recycled by crushing them into chips with a crusher, and bonding the chips into a material called chip foam (ribbon dead foam), or can only be burned for recovery of thermal energy. The method of disposal of polyurethane foams includes landfilling and incineration. However, stable lands cannot be created by using polyurethane foams since they are low in bulk density and soft, and hence landfill sites suitable therefor are limited. Polyurethane foams may be processed into particles or powders to be disposed which requires, however, extra handling and costs. Further, incineration of polyurethane foams may generate hydrocyanic acid gases (hydrocyanic acid) which cause much damage to incinerators, and have to be eliminated at high costs. As described above, it is difficult to dispose polyurethane foams in accordance with the Recycle Act without giving adverse side effects on environments during and after disposal.

In addition to above, polyurethane foams have problems as described below.

Manufacture of a polyurethane foam mold is achieved by blowing a foaming material in a die (for example, for three minutes) and separating the mold from the die. The separation process is complicated and molding time is long. It is difficult to clean polyurethane foams. This is because an amine catalyst used during manufacture is trapped in the foams, causing bad smell. A polyurethane foam has a heat storage property, and is liable to be stuffy, and there is a fear that if the polyurethane foam is exposed to intensive light for a long time, it may start to burn. Its safety to environments is low.

Although year 2020 is set to a deadline of abolition of use of CFCs (chlorofluorocarbons) substitute which is used as a foaming agent, there is not yet found an alternate agent that is more excellent in foaming performance than the CFCs substitute. TDI (tolylene diisocyanate) which is an isocyanate normally used for producing soft polyurethane foams is a very harmful material and Notification No. 25 of the Ministry of Labor of Japanese Government prescribes that TDI should be used at a concentration of 0.005 ppm or less. In many actual manufacturing sites, thorough control of TDI is not carried out, causing damage to health of workers.

The above-mentioned seat cushion pad for an automotive vehicle disclosed in Japanese Patent No. 2995325 is improved in the characteristics of the soft polyurethane foam, but still has the drawbacks of polyurethane foams. In the cushion structure proposed in the Japanese Patent No. 2548477, it is difficult to be recycled due to fusing polyester fibers with a high melting point via a thermoplastic elastomer with a low melting point, resulting in complicated manufacturing method and high cost for producing. Although the cushion proposed in Japanese Laid-Open Patent Publication (Kokai) No. 2000-51011 offers advantages in that it has excellent air permeability and is cleanable, it suffers from disadvantages in that it has a low durability, a manufacturing method thereof is complicated, and a processing cost is remarkably high. Further, since the rubber adhesive and a crosslinkable polyurethane are thermoset resins, and the cushion is not of a single composition, it is difficult to recycle the cushion.

At present, however, despite that polyurethane foams have many problems as described above, there is no alternate agent to replace polyurethane that can be used not less suitably and cheaply than polyurethane as a cushion material of the seats of automotive vehicles, motor cycles, bicycles, electric trains, and aircraft, and of beds.

Disclosure of Invention

In view of above, an object of the present invention is to provide a method for producing a cushion material composed of a resin molded article with a spring structure, that is, a material suitably used for producing any supports on which one can sit, rest or mount such as seats of automotive vehicles, motor cycles, bicycles, electric trains, and aircraft, saddles for horse riding, chairs, sofas and beds. To put it more specifically, the object of the invention is to provide a method for producing a molded article which simplifies molding process, permits the manufacture of a mold comparatively freely in shape and size, requires a small cost for production, and readily produces a cushion which satisfies widely different requirements offered to springy articles such as: being resistant to sinking and, when a user sits on it, being capable of dispersing his weight uniformly over the sitting surface so that it does not fatigue the user even if he sits on it for a long time, and which is excellent in shock resistance and load capacity. Particularly, the object of the invention is to provide a method for producing a molded article which simplifies production facilities, lowers production cost, improves the precision of molding, reduces works required for processing, and can provide finished products in which ends of the product will not disintegrate of themselves even without deliberately resorting to trimming or rounding-off after molding.

## SUMMARY OF THE INVENTION

To attain the above objects, the method of this invention for producing a cushion material composed of a resin molded article with a spring structure comprising a three-dimensional structure with voids at a predetermined bulk density comprising a single-layered structure or obtained by overlapping two or more layers having a same or different spring property, comprises the steps of forming the three-dimensional structure - by contacting, entwining, and gathering adjacent ones of random loops or curls of solid and/or hollow continuous filaments and/or short filaments made from a thermoplastic resin;

placing the three-dimensional structure in a female die:

heating a male die or the female die, or the female die and/or the three-dimensional structure to a temperature sufficiently high to soften the three-dimensional structure;

setting a volume of a cavity of the female-die so that a length of a stroke including-at least the longest stroke of the male-die when the male-die is entered into the cavity to a deep level, and adjusting a thickness of the three-dimensional structure by inserting the male die consisted of a base which forms a part of the product in a female die by an optional length equal to or shorter than the length of the longest stroke;

compressing the three-dimensional structure <u>to a thickness corresponding to the length of the stroke of the male-die which is inserted in</u> the female die; and

hardening the three-dimensional structure by cooling.

The method preferably further comprises a step of removing superfluous ends of the three-dimensional structure protruding into strokes between the male and female dies using a heat cutter, to thereby thermally fuse the ends as well as to cut them off.

The "continuous and/or short filaments" preferably includes filaments made from general purpose plastics (polyolefins, polystyrene resins, methacryl resins, poly vinyl chloride, etc.) or engineering plastics (polyamide, polycarbonate, saturated polyester, polyacetal, etc.). For example, they are preferably made from thermoplastic elastomers such as polyethylene (PE hereinafter), polypropylene (PP hereinafter), and nylon.

Particularly, the filaments are preferably made from a mixture obtained by adding a vinyl acetate resin (VAC hereinafter), ethylene vinyl acetate copolymer (EVA hereinafter), or styrene butadiene styrene (SBS hereinafter) to a polyolefin resin such as PE or PP. The mixture ratio of the vinyl acetate content of the polyolefin resin to VAC or EVA is 70 to 97 wt% to 3 to 30 wt%, preferably 80 to 90 wt% to 10 to 20 wt%. If the VAC content were equal to or lower than 3 wt%, the impact resilience of the three-dimensional structure would be low. On the contrary, if the VAC content were equal to or higher than 30 wt%, the thermal characteristics of the structure would be degraded. The mixture ratio of the polyolefin resin to SBS is 50 to 97 wt% to 3 to 50 wt%, preferably 70 to 90 wt% to 10 to 30 wt%. The polyolefin resin may be a regenerated resin.

"The continuous and/or short filaments" may be solid or hollow. If the continuous and/or short filaments are hollow, they are preferable because the air is entrapped in the hollow cavities of the filaments, and act as a spring which confers a characteristic spring property to the filaments. The air entrapped in the hollow cavities of the filaments also prevents the collapsing tendency of the filaments which would otherwise result from long and habitual use. The air entrapped in the hollow cavities of the filaments also preserves the rigidity of the three-dimensional structure. The hollow cavities may be continuous with other ones or may be independent of each other. As one illustrative example, each of single hollow fibers may have hollow cavities with septa inserted between adjacent cavities. If a mixture of solid filaments and hollow filaments is used as a material of the filaments, the mixture ratio of solid filaments to hollow filaments is preferably solid: hollow = 0 to 50 : 50 to 100. Further, if hollow filaments are used in a central portion of the structure, and covered with solid ones, the resulting structure will give a desirable tactile impression.

The "solid continuous filaments and/or short filaments" preferably have a diameter of 0.3 to 3.0 mm, particularly 0.7 to 1.0 mm. If the solid continuous filaments have a diameter equal to or smaller than 0.3 mm, the filaments would lose resiliency and fuse to each other so strongly that their void ratio would become undesirably low. On the contrary, if the solid continuous filaments have a diameter equal to or larger than 3.0 mm, the filaments would become so resilient that they would not form loops and curls, nor fuse together, which would lead to the lowered strength. If the filaments include hollow filaments, they preferably have a diameter of 1.0 to 3.0mm, particularly 1.5 to 2.0 mm. If the void ratio were equal to or lower than 10%, the hollow filaments would lose the merit of reducing the weight of the product relative to its bulk. On the contrary, if the void ratio were equal to or higher than 80%, the hollow filaments would lose their cushioning activity.

The bulk density of the "resin molded article with a spring structure" may be 0.005 to 0.08 $g/cm^3$, preferably 0.02 to 0.06 $g/cm^3$. If the bulk density in question were 0.005 $g/cm^3$ or lower, the article would have a reduced strength. On the contrary, if the bulk density in question were 0.08 $g/cm^3$ or higher, the filaments would lose the merit of reducing the weight of the article with respect to its bulk. The resin molded article with a spring structure may have a uniform density throughout its structure or may have a structure where high density and low density substructures repeat alternately at certain intervals. In the latter case, the low density substructure may have a density of 0.005 to 0.03 $g/cm^3$, preferably 0.008 to 0.03 $g/cm^3$, most preferably 0.01 to 0.03 $g/cm^3$. The high density substructure may have a density of 0.03 to 0.08 $g/cm^3$, preferably 0.04 to 0.07 $g/cm^3$, most preferably 0.05 to 0.06 $g/cm^3$.

The void ratio of the "resin molded article with a spring structure" may be 96 to 99%, preferably 97 to 99%, most preferably 97 to 98%. To maintain elasticity and strength of the structure as a cushion as well as reduce the weight thereof, the void ratio in question should be in the range as mentioned above.

$$[\text{void ratio (\%)}] = (1 - [\text{bulk density}]/[\text{density of resin}]) \times 100$$

The "cushion material" is preferably obtained by laminating multiple resin molded articles with a spring structure into a layered structure. The cushion material is preferably used as a material of the seats of automotive vehicles, motor cycles, bicycles, electric trains and aircraft, saddles for horse riding, chairs, sofas and beds. The cushion material may be used, in place of urethane foams, as a material of any supports on which one can sit, rest or mount regardless of whether they are exposed to vibrations or not.

Particularly, when the cushion material is used as a material of the seat of an automotive vehicle or motor cycle which is exposed to vigorous vibrations during use, it is preferred because it readily adapts to various individual requirements (e.g., suspension characteristic) of the vehicle because of its thickness being susceptible to external controls.

The "female die" is preferably made of concrete. The concrete die dispenses with the use of a separating agent, and thus reduces the cost of molding. The "male die" preferably consists of a product (base) to which the cushion material can be attached. Then, need for separate preparation of a male die can be safely avoided, which will allow the molding cost to be reduced, and precision of molding to be improved. Cooling may consist of spontaneous cooling or forced cooling. Forced cooling is preferably based on the use of water.

The cushion material of the invention is more receptive to secondary processing than polyurethane, and can respond to needs from consumers with regard to particular functions more finely than polyurethane. Molding the cushion material is achieved by compression molding. Thus, it is possible to provide a product to match with the body shape of a given user, or in accordance with the order of a user which will further enhance the advantage of the product. Moreover, by adjusting the diameter of filaments constituting a resin molded article with a spring structure, material of the filaments, and their denier, bulk density and void ratio, it is possible to allow the resin molded particle to have a desired spring property. Although individual filaments constituting the cushion material of the invention are equal in terms of spring property, they may be conferred different spring properties after having been differently compressed during compression molding. Therefore, it is possible to provide a cushion material in which different portions have different cushioning abilities and thus in which, when a weight is put thereon, the weight is supported in different manners according to the sites with which it is put into contact. Moreover, it is possible by adjusting the stroke of the male die to allow the mold to have a desired thickness.

Particularly, the "male die" may be constituted with a base (which forms an element of the cushion material constituting the product) to which a resin molded article with a spring structure can be attached. Then, deliberate preparation of a male die dedicated for the purpose can be safely dispensed with, which will lead to the reduced production cost. Moreover, because part of the product is used as an element (molding part) of the molding apparatus, precision of molding will be improved. For raising or lowering the male die, it is preferable to use a pantograph type framework. As compared with a hydraulic cylinder or pneumatic cylinder which is used in a conventional apparatus for molding polyurethane, the framework in question is so simple that it will contribute to the reduction of production cost as well as to the simplification of production facilities. The male die is preferably so constructed as to forbear a load weighing 1t or more. If the female die is made of concrete, it will be possible to safely dispense with the use of a separating agent which would be otherwise required, as well as to reduce production cost as compared with molding where metal dies are used for the same purpose. Moreover, since the molding process itself is simplified, and time required for molding is contracted, mass production of cushion materials will become possible. Cooling may consist of spontaneous cooling or forced cooling. Forced cooling is preferably based on the use of water.

Generally speaking, with regard to the resin molded article with a spring structure as described above, ends of the article tend to disintegrate after molding, and thus require trimming or rounding-off subsequent to molding, which may be cumbersome. However, with the present article with a spring structure, it is possible to trim ends of the article after compression molding by cutting and fusion using a heat cutter, and thus to dispense with the trimming process as above, which reduces superfluous works.

## BRIEF DESCRIPTION OF THE DRAWINGS

The objects and advantages of the invention will become apparent from the following detailed description of preferred embodiments thereof provided in connection with the accompanying drawings in which:

Fig. 1 shows a perspective view of a cushion material attached to a base 4.
Figs. 2a and 2b show frontal and rear views of the cushion material 1 attached to base 4, respectively.

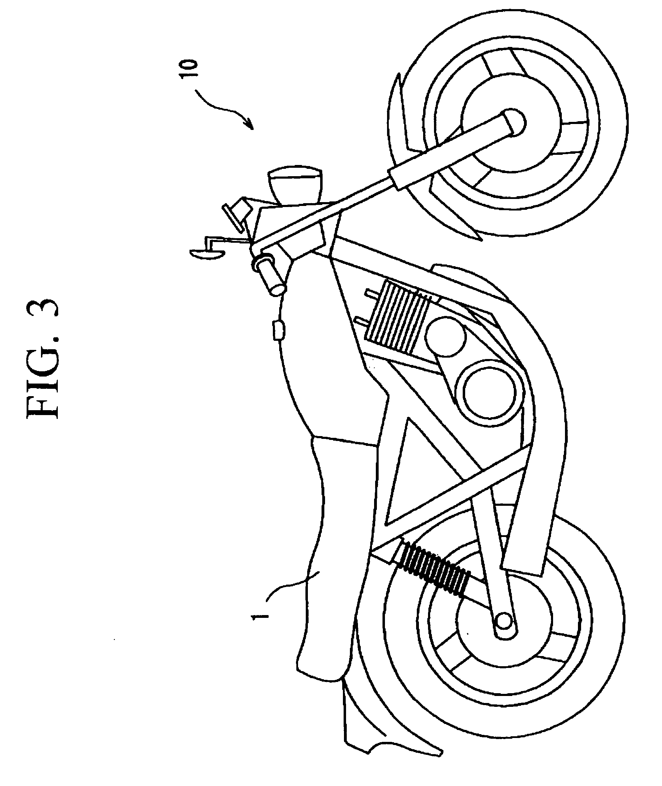

Fig. 3 shows a lateral view of a motor cycle 10 equipped with a seat composed of cushion material 1.
Figs. 4a and 4b show perspective views of base 4 viewed from different angles.
Fig. 5 illustrates a first step of the compression molding applied to the cushion material 1.
Fig. 6 illustrates the first step of the compression molding applied to the cushion material 1 viewed from a different angle.
Fig. 7 illustrates a second step of the compression molding applied to the cushion material 1.
Fig. 8 illustrates the second step of the compression molding applied to the cushion material 1 viewed from a different angle.
Fig. 9 illustrates a third step of the compression molding applied to the cushion material 1.
Fig. 10 illustrates a step for attaching the cushion material 1 to a base.
Fig. 11 is a diagram schematically showing steps necessary for producing a resin molded article 30 having a spring structure.

Fig. 12 shows a perspective view of an apparatus for producing a resin molded article 30 having a spring structure according to the method of the invention.

Fig. 13 shows a perspective view of another apparatus for producing a resin molded article 30 having a spring structure according to the method of the invention.

Fig. 14 shows a perspective view of yet another apparatus for producing a resin molded article 30 having a spring structure according to the method of the invention.

Figs. 15a, 15b and 15c show the cross-sections of other resin molded articles 30 having a spring structure embodying the invention.

Figs. 16a, 16b and 16c show the cross-sections of yet other resin molded articles 30 having a spring structure embodying the invention.

Figs. 17a and 17b show rear and perspective views of a molding die 622, respectively.

Figs. 18a, 18b and 18c show the cross-sections of a resin molded article 30 having a spring structure and of threads 31.

Figs. 19a and 19b show the cross-sections of yet another cushion material 1 embodying the invention.

Figs. 20a and 20b show the cross-sections of yet another cushion material 1 embodying the invention.

Fig. 21 illustrates another embodiment of compression molding necessary for molding a cushion material 1.

Figs. 22a and 22b illustrate yet another embodiment of compression molding necessary for molding a cushion material 1.

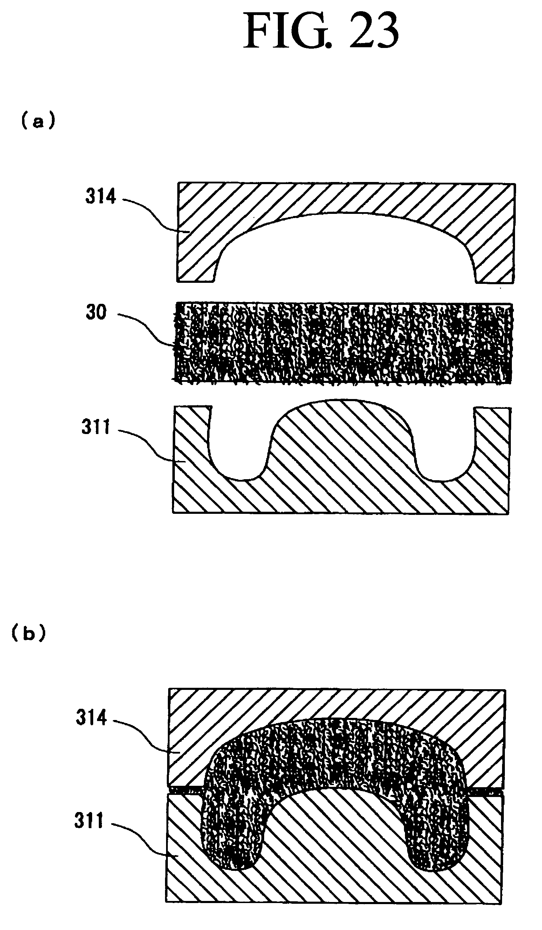

Figs. 23a and 23b illustrate an exemplary compression molding process applied to a cushion material 1 using a conventional apparatus.

Fig. 24 illustrates another exemplary compression molding process applied to a cushion material 1.

Figs. 25a and 25b illustrate yet another exemplary compression molding process applied to a cushion material 1.

Figs. 26a and 26b illustrate yet another exemplary compression molding process applied to a cushion material 1 using a conventional apparatuses.

## DETAILED DESCRIPTION OF THE PREFERRED EMBODIMENT

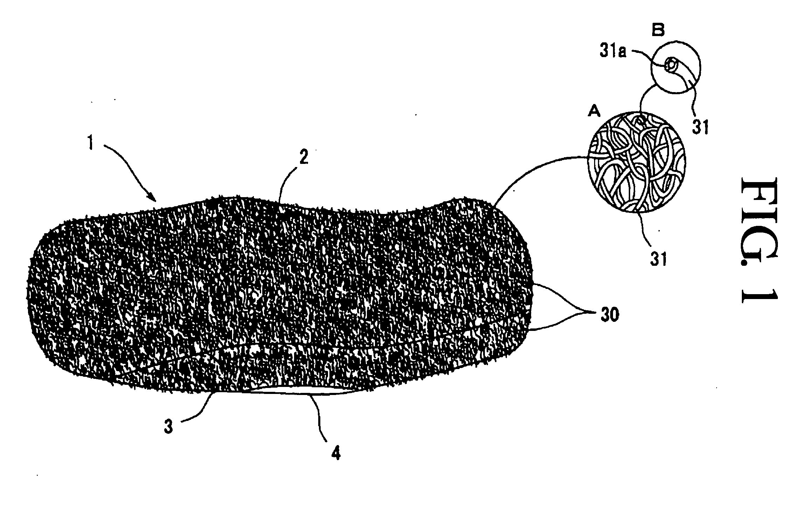

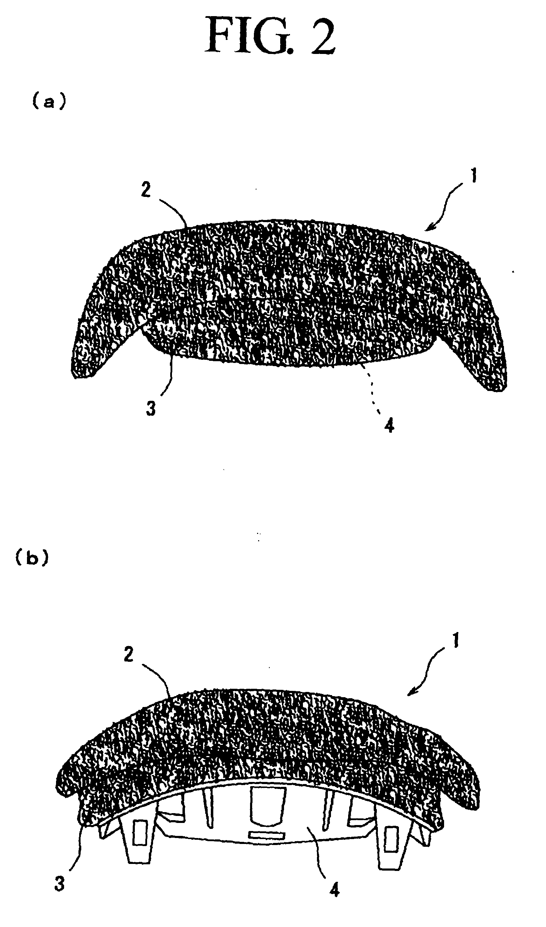

As is obvious from the reference to a perspective view shown in Fig. 1, and frontal and rear views shown in Figs. 2a and 2b, the cushion material 1 is obtained by preparing a thermoplastic resin (e.g., thermoplastic elastomer) such as a blend obtained by mixing, for example, a polyolefin resin such as PE, PP, etc., with VAC, EVA or SBS, and by processing the blend into a resin molded article 30 with a spring structure or a three-dimensional structure, and subjecting the article or the structure to compression molding.

### Explanation of a resin molded article 30 with a spring structure

Firstly, the resin molded article 30 with a spring structure will be described.

The resin molded article 30 with a spring structure used in this embodiment of the invention is a three-dimensional structure having voids which is obtained by contacting, entwining, and gathering adjacent ones of random loops or curls of continuous and/or short filaments (simply filaments 31 hereinafter) made from the above-described blend. The filaments exist as plural loops and curls (see the inset figure A of Fig. 1 which enlarges a part of interest). In this embodiment, the resin molded article 30 with a spring structure comprises hollow filaments 31 whose cross-section 31a is shown in the figure (see the inset figure B of Fig. 1 which enlarges another part of interest).

In this embodiment, the bulk density of the three-dimensional structure may be 0.005 to 0.03 $g/cm^3$, preferably 0.008 to 0.03 $g/cm^3$, most preferably 0.01 to 0.03 $g/cm^3$. The void ratio of the three-dimensional structure may be 96 to 99%, preferably 97 to 99%, most preferably 97 to 98%.

### Explanation of cushion material 1

Next, the cushion material 1 will be described.

The cushion material 1 is obtained by subjecting the resin molded article 30 with a spring structure to compression molding. The cushion material of this embodiment is mainly used as a material of the seat of an automotive bicycles (e.g., motor cycles 10).

The cushion material 1 has a bilayered structure consisting of two sheet layers (overlying sheet layer 2 and underlying sheet layer 3). The two sheets may have the same spring property, or different spring properties. The two sheet layers are preferably bonded to each other with an adhesive agent or double-faced tape. It is possible to cause the two sheet layers or different portions of each sheet layer to have different spring properties by appropriately adjusting the density of resin molded article 30 with a spring structure, its material, and/or the diameter of filaments of the article constituting the sheet layers. In detail, the two layers preferably have different spring properties such that, for example, the overlying sheet layer gives a rigid feel while the underlying sheet layer a soft feel.

According to this particular embodiment, the overlying sheet layer 2 is less rigid or softer than the underlying sheet layer 3. This is because the underlying sheet 3 must be fixed to a base 4 while the overlying sheet 2 must directly receive the buttock of a rider during riding. The overlying sheet 2 preferably has the bulge of its upper surface modified to fit to the shape of rider's buttock when the rider takes a riding posture on the seat. On the other hand, since the underlying sheet layer 3 is fixed to base 4, it must be harder than the overlying sheet layer 2. The cushion material is preferably constructed such that its shape is maintained via the hardness of the underlying sheet layer 3.

The cushion material 1 has a characteristic suspension property due to the underlying sheet layer 3. A conventional seat of an automotive bicycles using urethane foam usually receives a strong counter force (kick back) from the road surface after it exerts a downward spring move towards the road. To absorb such a counter force, the conventional seat of a motorcycle made from a polyurethane foam often contains coil springs intimately bonded to the polyurethane foam. However, according to this embodiment, the seat has a bilayered structure: the softer overlying sheet layer 2 is for receiving human weight while the harder underlying sheet layer 3 is for absorbing downward spring properties. This structural feature can dispense with the use of coil springs. Accordingly, the seat of this embodiment is advantageous in weight and structure, in simplicity and in that it does not require the introduction of any special facilities for absorbing downward spring properties. Moreover, the bulk of the seat is comparatively low, and thus the center of gravity lowers, which helps to stabilize the rider's posture during riding. Further, it is possible by adjusting the stroke of the male die to allow the cushion material 1 to have desired thickness for its different portions. Thus, it is possible by adjusting the stroke of the male die to produce cushion materials different in size, shape and profile to meet different suspension requirements.

Since the cushion material 1 is composed of a resin molded article 30 with a spring structure, its air permeability is so high that it naturally rejects the sojourn of moisture. Moreover, if cooled or warmed air transmitted through a duct from an air conditioner is permitted to pass through the cushion material of the seat of motorcycle 10, the rider can cool or warm his body during riding. If the same equipment is incorporated in the seat of an automotive vehicle, the vehicle can enjoy the state-of-the art function without resorting to any special facilities for the purpose.

The shape of the cushion material 1 having a bilayered structure comprising the overlying sheet layer 2 and underlying sheet layer 3 is not limited to the one described above with reference to figures, but may take any shape as desired according to given applications. For example, the cushion material 1 may have a single-layered structure. Conversely, the cushion material may have a multiple-layered structure comprising two or more layers. With regard to a cushion material having a multiple-layered structure, at least one underlying layer may be made of a synthetic rubber but at least one of the layers (preferably overlying layers) is preferably made of a thermoplastic resin. The shape of a bulge is not limited to the one described above. The shape, profile and size of a cushion material may be appropriately modified so as to finely meet given requirements such as product standards, functions, and individual customers' needs.

It is preferable to place a kilt cushion material composed of a resin molded article with a spring structure (stitched manually or with a sewing machine) over another cushion material having a multiple-layered structure (e.g., the overlying sheet layer 2 of cushion material 1), and to use the assembly as a top-sheet of the seat (not illustrated here). In this case, it is possible to confer such subtly undulating bulge that can never be observed in the seat prepared based on conventional molding, that is, to appropriately modify the shape, profile and size of cushion materials so as to provide seats that can finely meet given requirements such as product standards, functions, and individual customers' needs. Thus, it is possible to modify the size, shape and profile of the seat of motorcycle in accordance with the type of the motorcycle, or the body form of the rider. To put it more specifically, if the seat is for a motorcycle 10 or an automotive vehicle whose user (e.g., professional driver) is strict about driving posture, it is possible to modify the size, shape and profile of the seat in accordance with requirements from the user so that the seat can exactly fit to his driving posture and performance, which will confer the seat an additional merit.

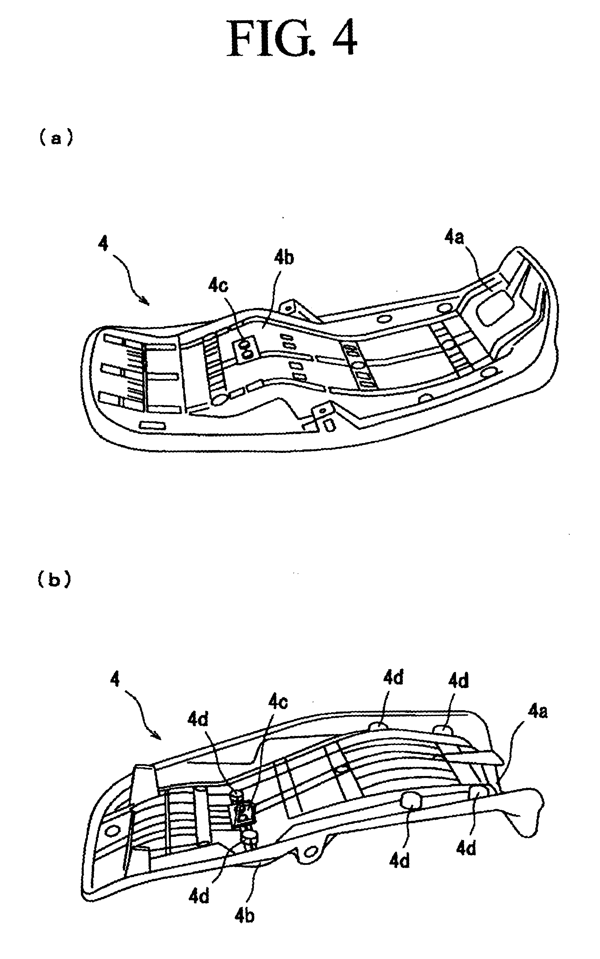

Both the overlying sheet layer 2 and underlying sheet layer 3 have shapes corresponding with that of base 4. As is obvious from inspection of the perspective views of Figs. 4a and 4b, the base 4 forms a basement of the seat of motorcycle 10. The base 4 has a stopper portion 4a on its frontal side and bulge 4b on its rear side. The bulge 4b has, on its bottom surface, brackets 4c with which the seat is fixed to the frame of motorcycle 10. The base 4 has several (e.g., six) cushions 4d made from rubber attached to its bottom surface. Otherwise, many grooves and holes are formed as shown in the figures.

Apparatus for producing a cushion material 1 and method therefor

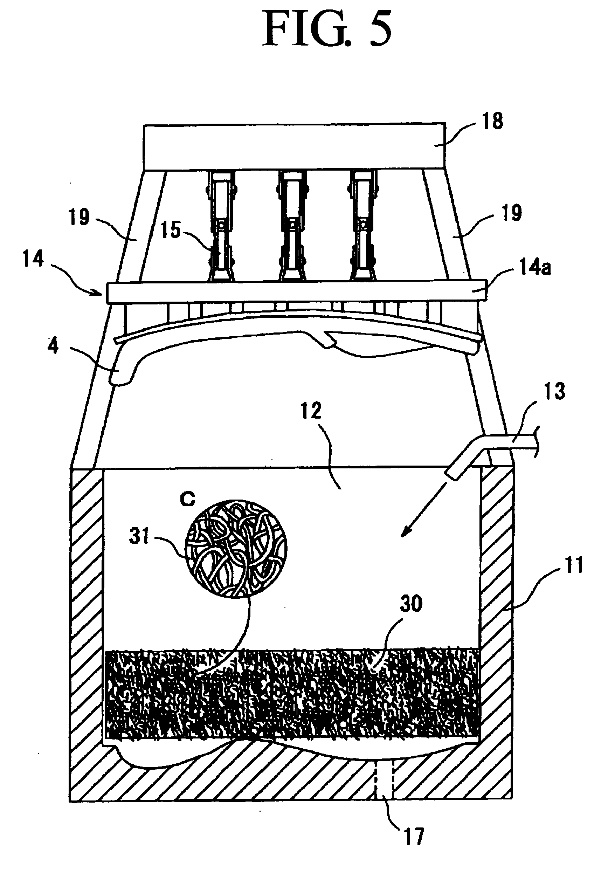

Next, an apparatus for producing a cushion material 1 embodying the invention and method therefore will be described with reference to Figs. 5 to 10. A method for producing a resin molded article 30 with a spring structure will be described later.

1) Feeding step

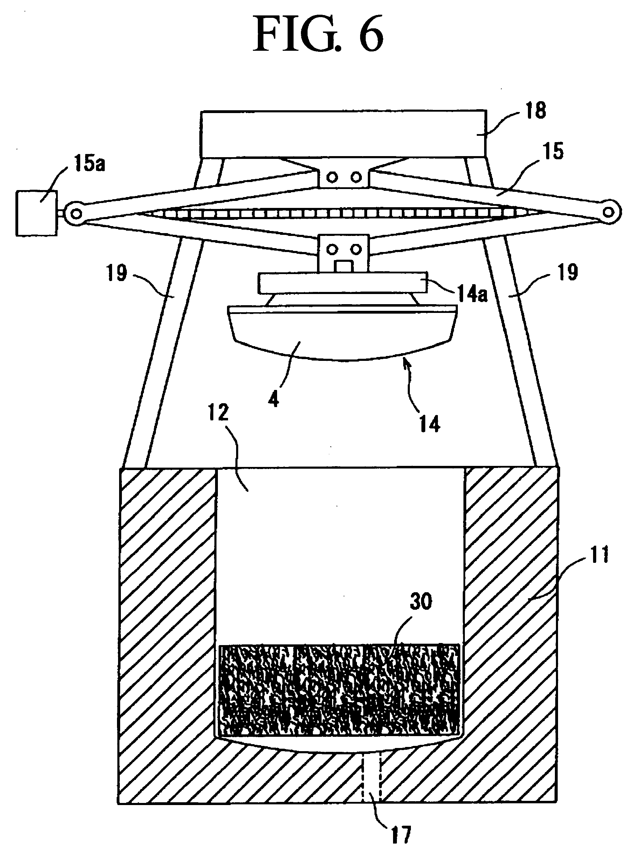

Fig. 5 shows a lateral view of a system for producing a cushion material 1 which is introduced for illustrating a first stage of compression molding required for molding the cushion material. Fig. 6 shows a frontal view of the same system for illustrating the first stage of compression molding. As seen from inspection of the illustration of Fig. 5 or 6, one or more resin molded articles 30 with a spring structure is placed in a female die 11 made of concrete (simply female die 11 hereinafter). At least two resin molded articles 30 may have the same spring property or different spring properties from each other. As described earlier, each resin molded article 30 is a three-dimensional structure having voids obtained by contacting, entwining, and gathering adjacent ones of random loops or curls of filaments 31 (see the inset figure C of Fig. 5 which enlarges a part of interest).

According to this production method, it is necessary to heat the resin molded articles 30 with a spring structure at a temperature exceeding the softening point of a resin constituting the filaments 31. To achieve this, hot water (preferably having a temperature of 70°C or higher) from a hot water feeder 13 is allowed to enter into the cavity 12 formed within the male die 11, to thereby heat the resin molded articles 30 with a spring structure to soften them. Feeding hot water into the cavity of female die 11 is for permitting the hot water to penetrate the resin molded articles 30 and to heat them from inside of the female die 11. Alternatively, the female die 11 itself may be heated with a heater. In this case, a heat conductor (e.g., heater) is preferably embedded in the concrete walls of female die 11. Preferably, the female die 11 are covered with a thermally insulating material (e.g., with a box made of wood or of a foaming resin). When it is necessary to heat the air (including the air in the hollow cavities, if the filaments are hollow) contained around filaments 31 constituting the resin molded articles 30 with a spring structure, preferably extra heat from the heater embedded in the concrete walls of female die 11 is used. The hot water feeder 13 may be substituted for a steam feeder 17 or the like. When a steam feeder 17 is used, steam inlets are formed on the wall of the female die 11 so that steam can enter the cavity 12 within the die via the inlets. Steam is preferably injected into the die when closure of dies occurs to thereby heat the mold. This mode of heating is preferred because it allows the uniform transmission of a high temperature to the mold. When molding requires pressurization as well as heating, steam heating is preferred because steam not only heats the mold but also can apply a pressure on it. Steam heating is also effective for pressurizing a mold while heating it, when the mold has such a complicated structure as to reject uniform pressurization when mechanically pressurized.

Preparation of the female die 11 may be achieved, for example, as follows. A framework is prepared from an appropriate material such as gypsum or the like. The framework is reversed and fixed on a horizontal plate, a separating agent is applied on the framework or the plate, a concrete powder is kneaded with water to give a paste, the paste is poured into the space enclosed by the framework, and the framework is removed to give a concrete die. Namely, after the concrete paste has hardened, the framework is reversed again to the original position, and the framework and horizontal plate are removed to isolate a concrete female die 11. During the preparation process, it is possible by forming a space below the horizontal plate attached to the framework, and by adjusting the height of the space to alter the strength, rigidity and thickness of concrete as desired. For example, to increase the thickness of concrete, it is only necessary to lower the fixing position of the plate. Since concrete is highly moldable, and easily produces a desired mold when poured into a framework to be hardened, the production cost of the concrete female die 11 is comparatively low (1/50 to 1/100 times as low as the production cost required for a similar die prepared via a conventional die). Concrete further allows the production of female molds 11 having complicated shapes, and mass production of the same mold with improved precision. For example, for molding molds of the same size, the same master framework can be used repeatedly. Further, since the concrete die comes into close contact with a melt, only tight closure of mating dies allows the formation of a mold each of which external faces is polished as smooth as an abraded surface. If the framework has a negative relief pattern on its inner wall, the pattern will be transferred to the corresponding outer wall of a mold. Or, if mating dies are closed with a vinyl sheet placed in between, the external surfaces of the mold will have an impression reminiscent of the texture or surface print of the vinyl sheet. Furthermore, since the female die 11 is made of concrete, it can safely withstand a high pressure that is applied while a cushion material 1 is molded, and its durability is so high as to withstand repeated usage as many as several tens thousand times moldings. The weight of the female die 11 is preferably 50 to 100 kg.

The male die 14 is constituted with a base 4 and male platform 14a (see Figs. 4a and 4b). The male die 14 is fixed at several points via fixtures to the distal end of a pantograph jack 15. The male die 14, being activated by the pantograph jack 15, mates with the female die 11 to thereby apply a pressure from upward onto the resin molded article 30 with a spring structure placed in the cavity 12 of the female die 11. The male die 14 is preferably so sturdy as to withstand a pressure of 10t or higher. In this embodiment, a plurality of (e.g., three) pantograph jacks 15 are attached to one male die 14. This is for increasing a pressure applied to the mold, and for dispersing the applied pressure over plural (e.g., three) sites. The pantograph jack 15 may be operated manually, or may be automatically operated being connected to a motor 15a as needed. The proximal end of pantograph jack 15 is fixed to a roof 18, and the roof 18 is supported by pillars 19 on the top edges of the female die 11. Introduction of the pantograph jack 15 allows the structure of the system to be simplified which leads to the reduction of cost. However, the pantograph jack 15 may be substituted for a hydraulic or pneumatic cylinders or the like.

The male die 14 preferably includes, as its element, a base 4 which also serves as an element of the product.

The base 4 is attached to the male die platform 14a with the bottom surface of the former facing to the lower surface of the latter. The upper surface of the male die platform 14a is fixed via joining members to the pantograph jack 15. Since part of the product (base 4) also comprises as an element (male die 14) of the molding apparatus, it is only necessary to prepare a female die 11 and separate preparation of a male die 14 can be safely dispensed with. With the conventional system for molding polyurethane foams, it is necessary to prepare male and female dies separately. However, with the system operating according to the method of the invention, since part of the product serves as an element of male die, preparation of a platen and punch is not needed, which leads to reduced costs and improved precision of molding.

2) Die closing process

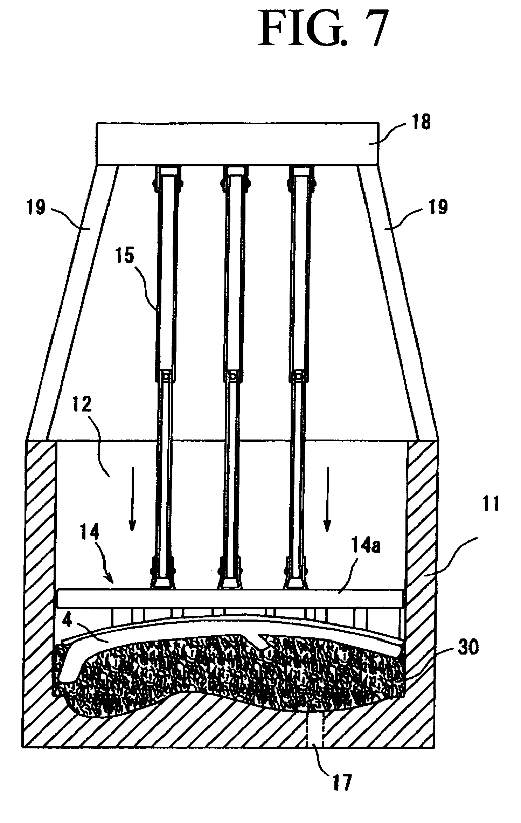

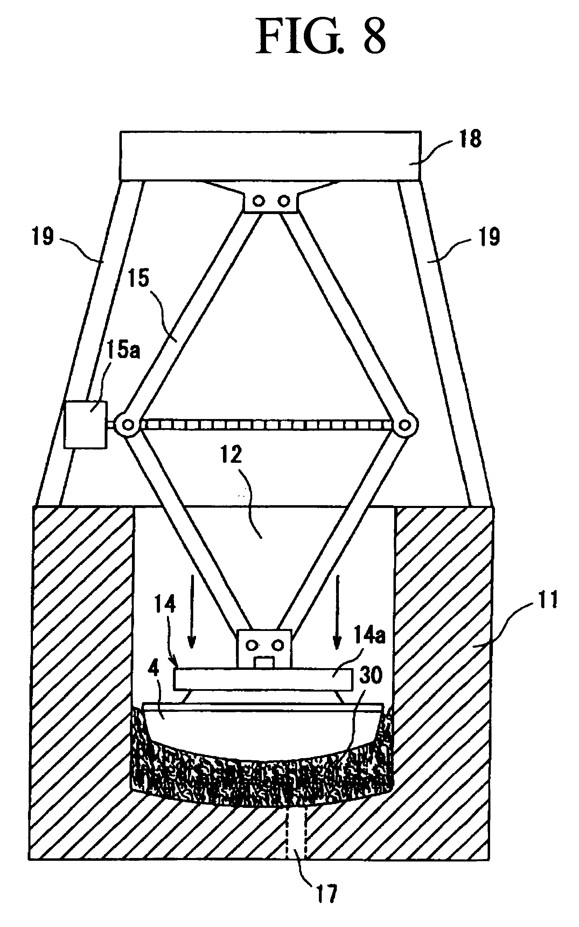

Fig. 7 shows a lateral view of the system for producing a cushion material 1 which is introduced for illustrating a second stage of compression molding required for molding the cushion material, while Fig. 8 shows a frontal sectional view of the same system for illustrating the second stage of the compression molding. As seen from inspection of the illustrations shown in Figs. 7 and 8, the pantograph jack 15 is activated to push the male die 14 (which is acted by the base 4) downward as indicated by the arrows in Figs. 7 and 8, to compress the mold. In this particular embodiment, the female die 11 is so adjusted as to allow the male die to enter into the cavity 12 to a deep level. Namely, the female die 11 can be adjusted so as to allow the male die 14 to enter into the cavity to a desired level. Since mating of the two dies occurs with a more or less redundancy, it is possible to alter the thickness of cushion material in accordance with a given requirement by adjusting the stroke between the two mating dies. Therefore, with the same pair of mating dies, it is possible to produce cushion materials having various thickness. Needless to say, it is also possible to alter the density of cushion materials. As described above, with the same pair of mating dies, it is possible to produce various cushion materials varying in density, spring property and rigidity by simply adjusting the stroke between the two mating dies as appropriate.

With this system it is possible to freely adjust the thickness of a cushion material 1 by adjusting the stroke between the two mating dies. If it is required to produce a thin cushion material 1, it is only necessary to reduce the stroke between the two mating dies to a desired small distance. Conversely, if it is required to produce a thick cushion material 1, it is only necessary to increase the stroke between the two mating dies to a desired large distance. Namely, with this system it is possible to freely adjust the thickness of a cushion material 1. It is also possible to freely adjust the density, spring property and rigidity of a cushion material. If the tapered angle of the inner lateral walls of the female die 11 (inner lateral walls of the female die illustrated are substantially perpendicular to the base) is made smaller as needed than illustrated, it is possible to produce a cushion material whose profile has a desired slope angle. The desired slope angle may include, for example, 1/50 to 1/400 (e.g., 1/200). The slope angle may be inwardly or outwardly directed. If the female die 11 has a too large inward slope angle, it will be difficult to adjust the stroke between the two mating dies to a desired distance. Thus, it is possible using the same pair of mating dies to produce various cushion materials 1 in accordance with given requirements. Particularly, it is possible to produce the same cushion materials 1 having various desired thickness. For example, it is possible to produce a cushion material in accordance with a given personal order, that is, to produce cushion materials finely meeting personal needs of individual customers. With regard to the parts of the seat facing the inner thighs of rider, it is preferred to prepare the parts such that they have an enhanced density and rigidity at the cost of spring property. This improves the cushioning property and durability of the seat.

Generally, the outline of the seat is determined by the rider's riding posture, and is more or less constant. However, the thickness of the seat may vary depending on the type (required suspension property) of the motorcycle. Thus, it is necessary to adjust the thickness of the cushion material 1 according to the type of the motorcycle. When a polyurethane foam is used as a cushion material, it is processed into a mold while foaming. Thus, the mold undergoes uniform expansion during molding as long as the same dies are used. Thus, it is necessary to prepare multiple pairs of mating dies if it is required to produce cushion materials having different densities and thickness. According to the production method of this invention, the problems encountered with the conventional method using polyurethane foams can be safely avoided.

3) Trimming process

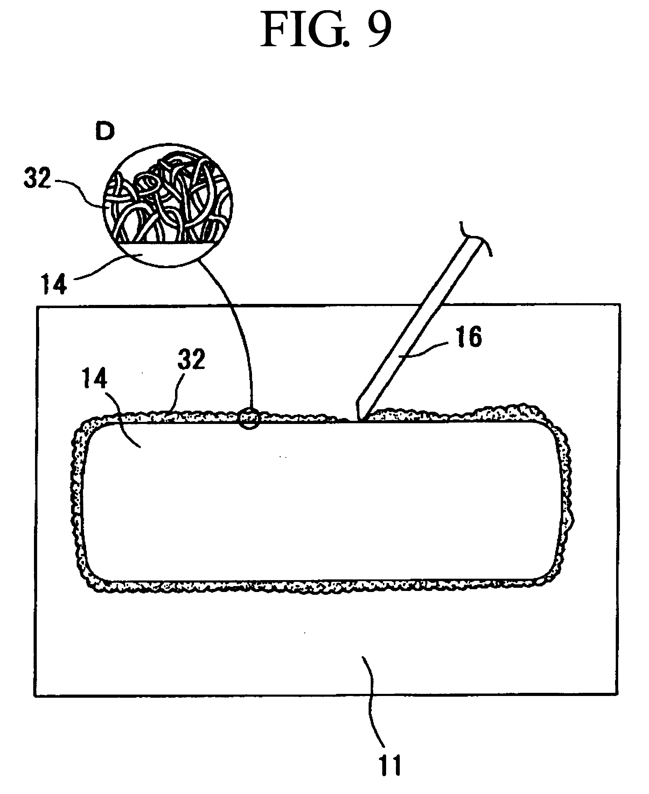

Fig. 9 shows a flat view of the system for producing a cushion material 1 which is introduced for illustrating a third stage of compression molding required for molding the cushion material. As seen from inspection of the illustration shown in Fig. 9, after the mating dies are kept closed for a certain predetermined period, a heat cutter 16 is moved along the edges of the male die 14 to remove burrs 32 protruded from the edges of the male die 14 (see the inset figure of Fig. 9 which enlarges a part of interest) by cutting out those burrs as well as fusing the filament ends of the burrs. According to the conventional method, the mold has its edges trimmed after molding to fit to a desired size, which complicates works involved in trimming. However, with the method of the invention, the mold is easily trimmed. Particularly, since trimming is introduced at a stage subsequent to molding, it is possible to fuse the open ends of filaments of the burrs to prevent their disintegration during use, to dispense with the scaling step where the mold is tested for its size being as designed, and to simplify testing procedures subsequent to molding.

4) Mold separating process

Cooled water is poured in the cavity 12 of female die 11 to harden the resin molded article 30 with a spring structure. The water is poured abruptly at one time instead of being slowly poured little by little, which leads to the reduction of time required for hardening. After enough time has passed for the mold to harden, the mold is separated from the dies. Whether a given mold hardens or not is determined by slightly relaxing the pantograph jack 15 to see whether there is any spring-back from the mold. If it is found that there is no spring-back from the mold, the mold sufficiently hardens. Then, cycles of alternate heating and cooling the female die 11 and/or resin molded article are repeated. If a mold is composed of hollow filaments, it is possible to prevent 30 from occurring spring-back by keeping a thermally equilibrated condition in consideration of the air masses kept in the hollow cavities of filaments.

When the female die 11 is made of concrete, the resin, even if it is melted, will not adhere to the inner walls of the die which dispenses with the use of a separating agent. With a molding apparatus incorporating conventional dies, the temperature rises so sharply during molding that the resin melt readily adheres to the inner walls of dies. To meet this drawback, when a polyurethane foam is molded, it is absolutely necessary to use a separating agent which may require extra work and time. When the mating dies are made of concrete, the mold contacts so intimately with the walls of dies that it is possible to mass-produce copies having an exactly similar size and shape, even though the shape is complicated.

5) Finishing process

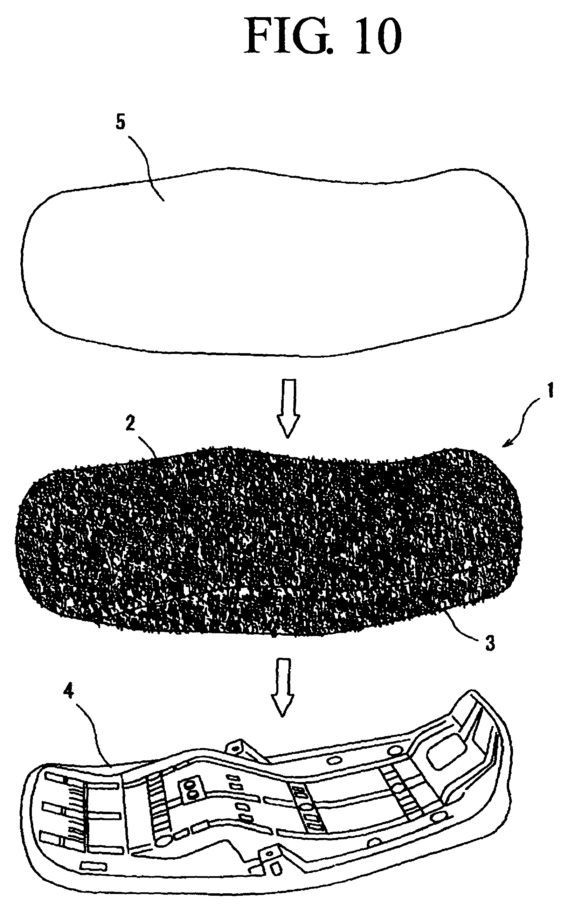

As shown in Fig. 10 which illustrates how a cushion material 1 is attached to a base, an overlying sheet 2 and underlying sheet 3 both prepared as described above are placed one over another, and the assembly is laid over a base 4. A heat-shaped vinyl leather sheet 5 is laid over the assembly, and fixed to the base 4 with a stapler. Alternatively, fixation of the vinyl leather sheet 5 to the base 4 may be achieved via an adhesive tape. If the underlying sheet 3 is allowed, during molding, to have indents (or recesses) which engage with corresponding recesses (or indents) formed on the base 4, it is possible for the assembly to be safely fixed to the base without requiring the use of a stapler or double-faced tape. Layering of the overlying sheet 2 on the underlying sheet 3 may be stabilized by inserting a bonding agent or adhesive tape between the two opposite surfaces. Alternatively, the two sheets may have indents or recesses on their opposing surfaces which will engage with each other when the two sheets are assembled. Then, assemblage of the two sheets does not require the use of a bonding agent or adhesive tape. It should noted, however, that assemblage of the overlying sheet 2, underlying sheet 3 and base 4 may not require any deliberate fixation procedure, as far as they are covered with a vinyl leather sheet 5 in the finishing process.

Method for producing a resin molded article 30 with a spring structure

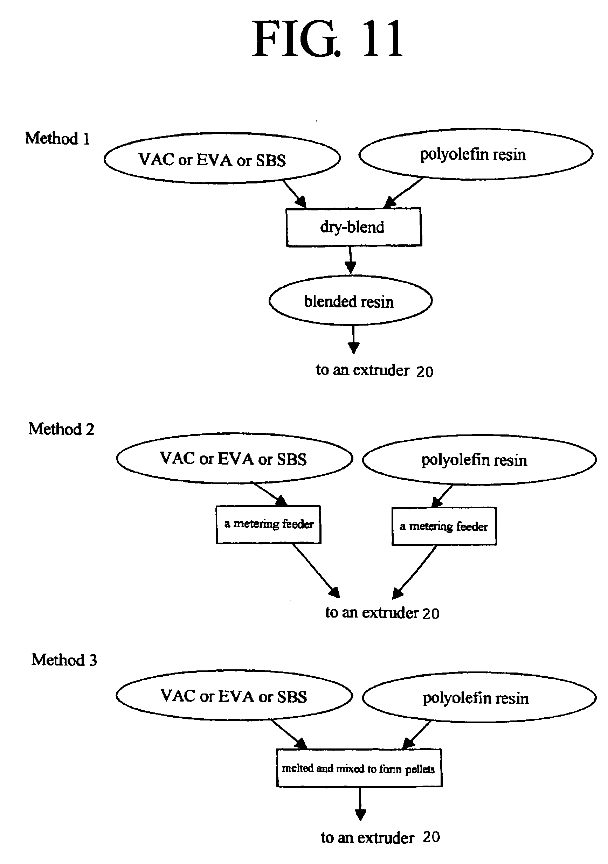

An exemplary method for producing a resin molded article 30 with a spring structure as described above will be described. As shown in the diagrams of Fig. 11, according to the method of this embodiment for producing resin molded articles 30 with a spring structure, preferably, a polyolefin resin such as PE, PP or the like and another resin such as VAC, EVA or SBS are fed, in appropriate amounts, via a supplier such as a tumbler, feeder or metering feeder, and the start resin is dry-blended, mixed, or dissolved in a solvent, kneaded and fragmented into pellets. The powdery mixture or pellets are transferred to a hopper 21 of an extruder 20.

To be more specific, start resins, e.g., PP and SBS are mixed with a tumbler (KR mixer, Kato Scientific Instruments Co.) at 40 rpm for 15 minutes.

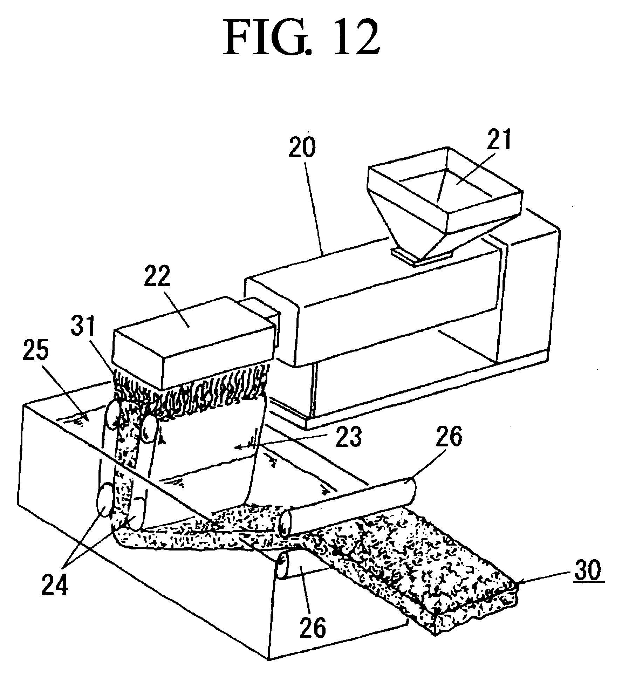

Next, as seen from the perspective view of Fig. 12, a mixture comprising the start resins is poured via a hopper 21 to a uni-axial (axis diameter being 65m) extruder 20. The mixture is melted at a predetermined temperature (e.g., 200 to 260°C), and the melt is kneaded and subjected to melt-extrusion at a predetermined speed through a plurality of nozzles, taken off by a winder 23 which will be described later, and formed into solid and/or hollow continuous filaments 31 having a predetermined diameter (e.g., 600 to 90,000 deniers, preferably 3,000 to 30,000 deniers, more preferably 6,000 to 10,000 deniers). The filaments 31 in a fused state are caused to form loops having a diameter of 1 to 10 mm, preferably 1 to 5 mm, and are taken off by the winder within a (water) bath 25 while bringing adjacent ones of the filaments into contact with each other within the water to be entwined forming random loops. The contacted and entwined portions of the filaments are at least partially fused and bonded to one another. The filaments 31 may comprise solid filaments and hollow filaments at a predetermined ratio.

The thickness and bulk density of the three-dimensional structure or a mass of random loops may be determined as appropriate by adjusting the stroke between take up rolls 24, 24 of the winder 23 in the bath 25. The three-dimensional structure (e.g., 10 to 200 mm in thickness and 2,000 mm in width) obtained by processing filaments 31 so as to form a mass of random curls or loops, and hardening them in water, is applied to another pair of take-up rolls 26, 26 to produce a resin molded article 30 with a spring structure.

When filaments 31 which have been formed into loops in water are taken off by the winder 23, the cushion property of the resulting three-dimensional structure may be altered as appropriate by adjusting the take off speed of the winder 23. The three-dimensional structure, when it is required to have a comparatively high bulk density, should have a bulk density of 0.03 to 0.08 $g/cm^3$, preferably 0.04 to 0.07 $g/cm^3$, most preferably 0.05 to 0.06 $g/cm^3$. The three-dimensional structure, when it is required to have a comparatively low void ratio, should have a void ratio of 91 to 97%, preferably 92 to 96%, most preferably 93 to 94%.

In taking off the filaments, the take-off speed of the winder 23 is adjusted to a low take-off speed at intervals of e.g., 3 to 5m by e.g., reducing the take-off speed of take up rolls 24, 24 to a low predetermined level at certain predetermined regular intervals. Then, it is possible to obtain a resin molded article 30 with a spring structure comprising a series of alternate high-density portions and low-density portions repeating at regular intervals (e.g., 30 to 50 cm) in a longitudinal direction, the high-density portions being formed when filaments are taken off at a low take-off speed while the low-density portions being formed when filaments are taken off at a high take-off speed.

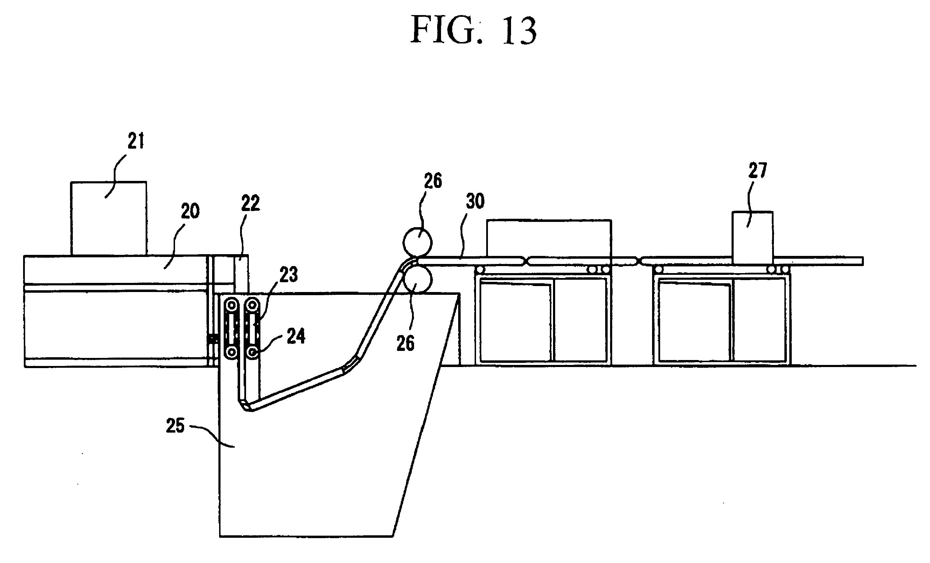

As seen from the frontal view of Fig. 13, if it is expected that a three-dimensional structure such as a resin molded article 30 with a spring structure will hardly be bent by the take-up rolls 24, 24, it is possible to adjust the take-off speed of the winder as above to produce a three-dimensional structure comprising a series of high-density portions and low-density portions, and to adjust the winder system such that the three-dimensional structure can be bent at their low-density portions. The resin molded article 30 with a spring structure obtained via the above-described processes are cut with a cutting device 27 into pieces having a desired length. The bath 25 is equipped with inlet and outlet valves (not illustrated here).

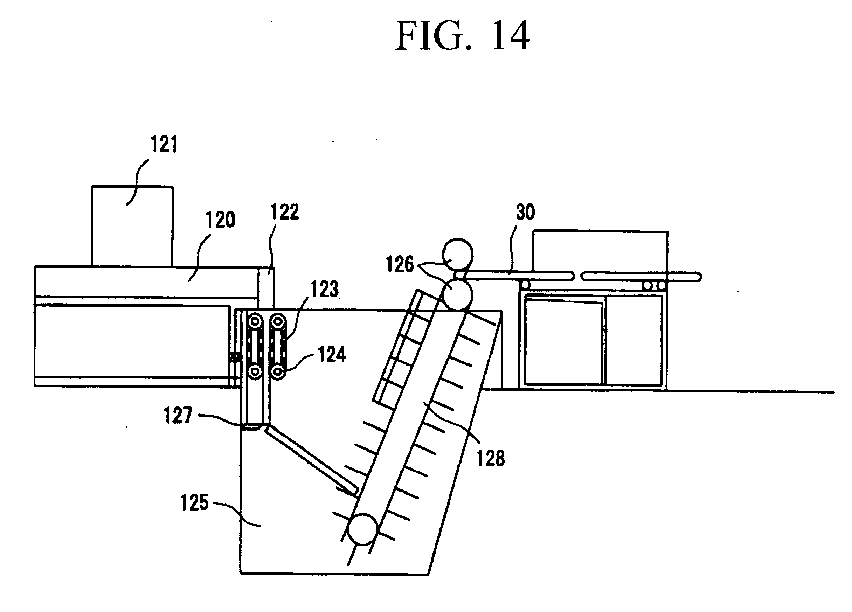

As seen from the frontal view of another apparatus shown in Fig. 14 where a cutting device 127 is placed in a water bath 125, the cutting device 127 is put below a winder 123, and a transport device 128 comprising a conveyor carrying multiple joining spikes on its surface is placed in the water bath 125 opposite to the winder. The conveyor carries spring structure pieces obtained by cutting a three-dimensional structure at predetermined sites by piecing joining spikes into the pieces and thereby capturing them on its surface. The elements corresponding with those of the foregoing embodiment are represented by similar numerals with, however, 1 being attached to the third place of the numerals.

By a method as described above, a resin molded article 30 having a spring structure is obtained which has, for instance, a bulk density of 0.03 $g/cm^3$ and thickness of 50 mm. The three-dimensional structure can be manufactured by using sub-structures which include one type of property or a combination of a plurality of types of properties different from each other. For the details of how resin molded articles 30 with a spring structure are actually produced by the aforementioned method, and results of the tests performed on them, the readers are referred to EP 00-1-182-826AI and others which were published by the present Inventors.

Other embodiments of resin molded articles 30 with a spring structure

Resin molded articles 30 with a spring structure representing embodiments other than the foregoing ones will be described below. Their molding is based on the viscosity of start resins.

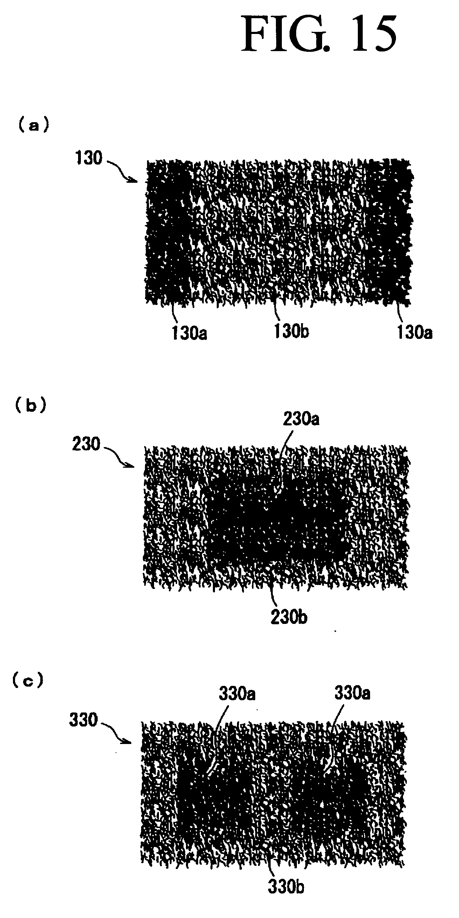

During molding of a resin molded article 30 with a spring structure mentioned below, it is possible to obtain a three-dimensional structure which comprise portions different in cushion property by adjusting the take-off speed and heating temperature. For example, it is possible to obtain a resin molded article 130 with a spring structure as shown in Fig. 15a where the cushion property is weakened gradually or at predetermined regular intervals as a testing probe advances from the periphery to the core. In this particular example, the periphery is constituted with a hard portion 130a while the core with a soft portion 130b. This distribution of cushion property may be reversed as seen from a resin molded article 230 with a spring structure shown in Fig. 15b where the core is constituted with a hard portion 230a while the periphery with a soft portion 230b. It is also possible to obtain a resin molded article with a spring structure where spots having a different cushion property (for example, two spots) are dispersed in the article as seen from the one 330 shown in Fig. 15c.

A resin molded article with a spring structure like the one 130 is suitable as a cushion material of the seat of a motorcycle 10. Since the cushion material 1 has hard lateral surfaces, they adequately fit to the medial bulges of the rider's thighs when the rider mounts on the seat and takes a riding posture, which leads to stable driving. A resin molded article with a spring structure like the one 230 is suitable as a material of a helmet. A single three-dimensional structure of which the surface (contacts with the scalp) is soft while the core is rigid enables the production of caps (sun hats and helmets) which will not disturb the hair style. Such a cap is preferable because it prevents the penetration of sun beams but permits excellent air permeability.

The cushion material of a seat may achieve its assigned function as long as it has a sufficiently rigid external surface, depending on the weight applied on the seat and bending it undergoes when loaded with the weight. In such a case, it is possible to obtain a resin molded article with a spring structure by preparing plural thin three-dimensional structures each having a different density, and laminating them in an appropriate combination into a single layered structure, instead of preparing a single three-dimensional structure which comprises portions having different densities. This method permits the amount of resins used for preparing a spring structure to be saved, and improves productivity.

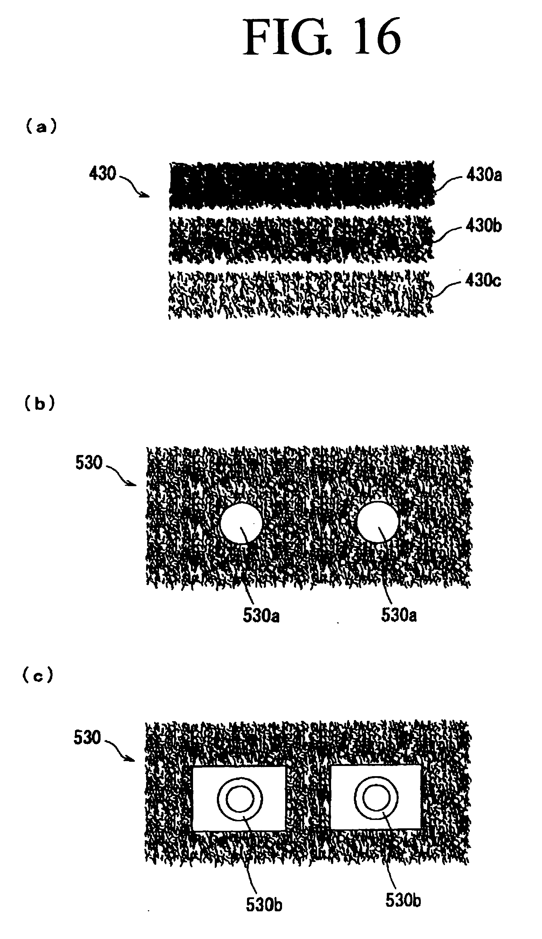

For example, it is possible to obtain a resin molded article with a spring structure 430 shown in Fig. 16a, by preparing a three-dimensional structure 430a, placing another structure 430b having a lower bulk density below it, and placing a second structure 430c having a yet lower bulk density below the former, and bonding the three structures into a single layered structure.

It is also possible to obtain a resin molded article 30 with a spring structure 530 shown in Fig. 16b which is partially reinforced with cavities 530a (partition blocks) which are formed in the structure by heating the spots to melt away filaments there. Formation of cavities 530 may be achieved prior to or subsequent to compression molding. It is also possible to obtain a resin molded article 30 with a spring structure as shown in Fig. 16c where each cavity includes a clamp 530b like a metal brace. The clamp 530b may be inserted into the cavity prior to or subsequent to compression molding.

The diameter of filaments 31 constituting a resin molded article 30 with a spring structure is not necessarily uniform. Even if a single cushion material is used as a seat, the weight imposed on a given portion differs depending on which part of the seat the portion occupies. Enhancing the rigidity of a given portion can be achieved by altering the bulk density of that portion as well as by modifying the diameter and/or hardness of filaments constituting the portion. For example, it is preferable to distribute thick and/or rigid filaments to a portion which comes into contact with the rider's buttock and sustains a large part of his weight during riding.

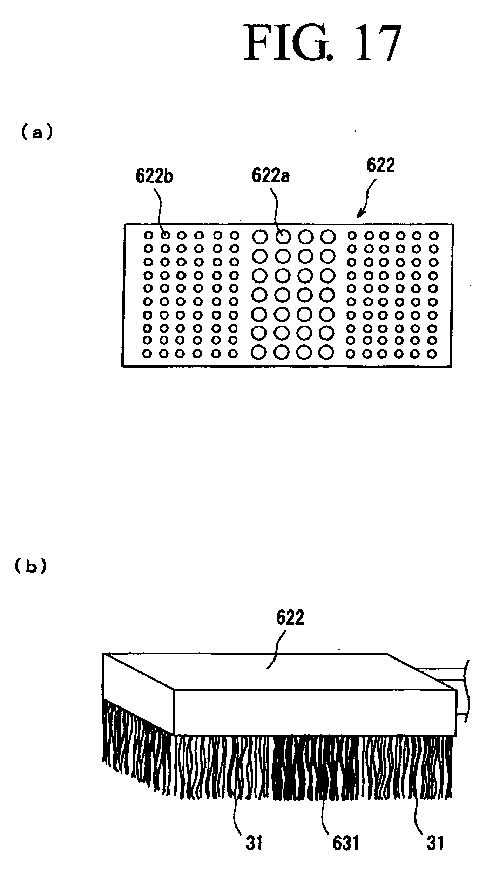

To produce a spring structure where one portion (e.g., central portion) comprises more thick filaments than the remaining portions, the molding die 622 has nozzles prepared as shown in Fig. 17a such that nozzles 622a corresponding to the central portion have a larger diameter than the remaining nozzles 622b. If this molding die 622 is used, thick filaments 631 are extruded from its central portion together with normal thin filaments 31 extruded from the remaining portions as shown in Fig. 17b. It is possible to obtain a spring structure where the rigidity is altered in a complicated manner, by using such a molding die as described above.

It is also possible to obtain a cushion material which comprises filaments having the same thickness and bulk density with those of a comparable structure but is softer or harder than the comparable structure, by employing a filament material different from what is used in the comparable structure. For example, if the cushion material 1 is used as the seat of a motorcycle 10, it is possible to employ a different filament material in accordance with the weight of a user, which will increase the marketing value of the seat.

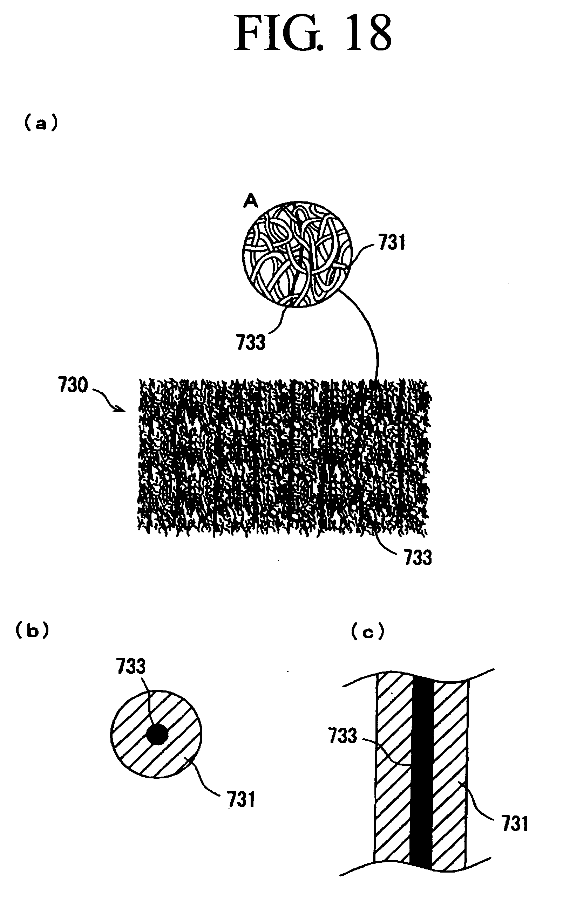

It is also possible to entwine filaments of a spring structure with natural fibers or metal wires to thereby produce a complex spring structure. By so modifying the filaments of a spring structure, it is possible to improve, for example, the thermal resistance, collapsing tendency under prolonged use, and tensile strength of filaments, that is, weak points inherent to synthetic resin filaments. For example, it is preferable to entwine filaments 731 with plural metal wires 733 as represented in a resin molded article 730 with a spring structure shown in Fig. 18a. It is also preferable to combine hollow filaments 731 with metal wires by not only entwining the former with the latter, but inserting the latter through the cavity of the former as shown in a sectional view of a combined filament of Figs. 18b and 18c.

Cushion materials 1 representing other embodiments

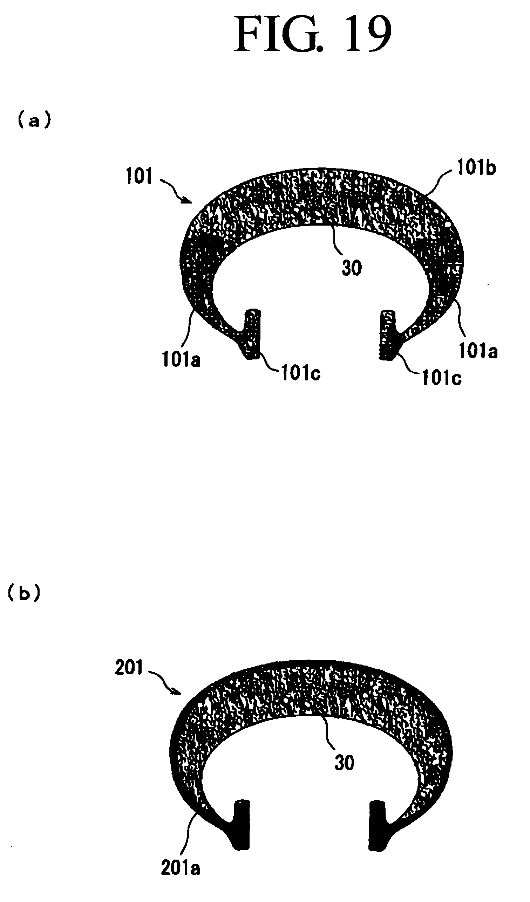

When a female die 11 and male die 14 are closed to compress a mold to produce a resin molded article 30 with a spring structure, it is possible to alter the heating temperature in a stepwise manner to thereby produce a spring structure in which the rigidity changes from one portion to another. For example, it is possible to produce a cushion material 101 as shown in Fig. 19a where a lower portion 101 a (plate-like portion) is rigid while an upper portion 101b is soft. The edges 101c are preferably heated to be formed into rigid plate-like portions. For example, edge portions 101c where filament ends are curled by heating are preferably processed to take a plate-like form during trimming. The edge portions 101 can snugly mesh with the corresponding edges of a base 4. Preferably, prior to assemblage, the edge portions 101c are expanded, and allowed to return by spring property, to thereby mesh with the corresponding edges of the base. This arrangement allows the cushion material to be attached to the base without requiring the use of a stapler, or to be detached from the latter.

When a female die 11 and male die 14 are closed to compress a mold to produce a resin molded article 30 with a spring structure, the female die 11 may be hotly burnt so as to raise the temperature of the die to such a high level as to melt the surface of a mold which, when hardened, forms a hard skin covering the mold (epidermis molding). With this method, it is possible to melt and harden only the superficial skin 201 a of a mold or resin molded article 30 with a spring structure as seen from a cushion material 201 of Fig. 19b, which will dispense with later coating (e.g., coating with a vinyl leather 5). This method is also applicable for molding an instrument panel using a resin as a material. Namely, according to this method, it is possible to not only prepare a mold but also form a hard superficial skin around the mold. Particularly, if a cushion material 1 must be water-proof or insoluble to solvents, or must have a protective coating, the epidermis molding based on hot burning is preferably employed to form the superficial skin 201a.

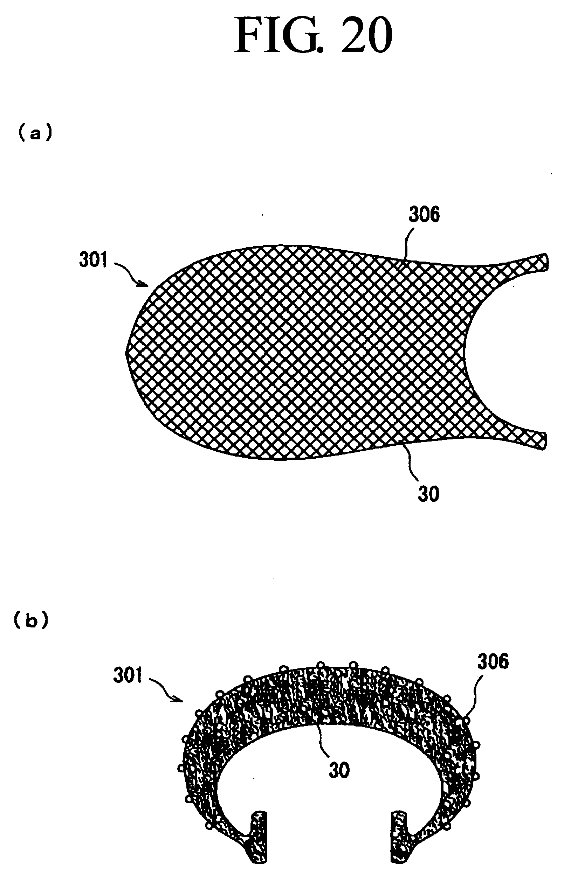

Since the cushion material 1 constituted with a resin molded article 30 with a spring structure of this embodiment is highly air-permeable, it is more preferable depending on given applications to dispense with the use of a vinyl leather 5 than to cover the cushion material 1 with the leather. If the use of a vinyl leather is omitted, a resin molded article 30 with a spring structure is preferably covered with a net 306 as seen from the cushion materials 301 shown in Figs. 20a and 20b. The net 306 may be applied over the cushion material 301 after compression molding. The net 306 is preferably made of a water-repellent material (e.g., plastics). Then, the net 306 can maintain its excellent air permeability, and thus the seat is conveniently used even when the area is humid or the time is a wet season. Particularly such a seat is suitably used when incorporated in a buggy which usually runs on a sandy land. The net 306 prevents the disintegration of a cushion material 301 so effectively that it improves the durability of the seat. The mesh density of the net 306 is not limited to the one shown in the figure, but may be set to any desired level. A vinyl leather sheet 5 may be applied over the net-covered cushion material. This is because, when the seat is incorporated in an electric train and is damaged intentionally, the seat can be prevented from the entry of foreign objects.

Mating dies representing other embodiments

In the above embodiments, the female die 11 is placed downward while the male die 14 placed upwards, but positioning of the two dies may be reversed. If the reverse positioning is adopted, the female die 11 applies its weight on a mold during molding, and thus compression molding is achieved via pressures imposed by a compressor as well as via the weight of the female die. Both the female die 11 and male die 14 are preferably made from concrete, metal or FRP (fiberglass reinforced plastics). If the heavier die is placed upward (pressing side) and allowed to mate with the opposite die placed downward, it is possible to exploit the weight of the upper die for compression molding. For example, compression molding may be achieved by placing one die made from heavier concrete upward, and the other die made from lighter concrete downward, or by placing one larger die upward and the other lighter die downward.

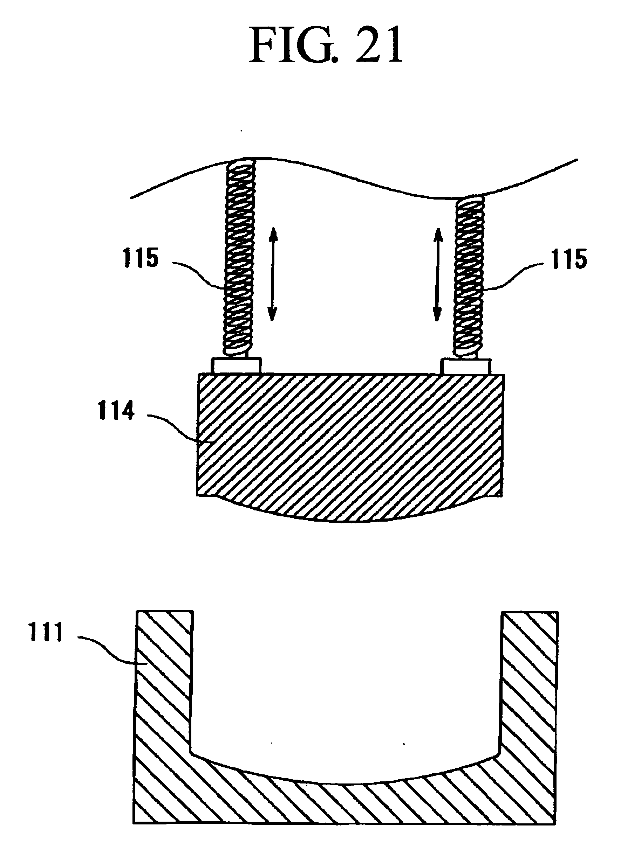

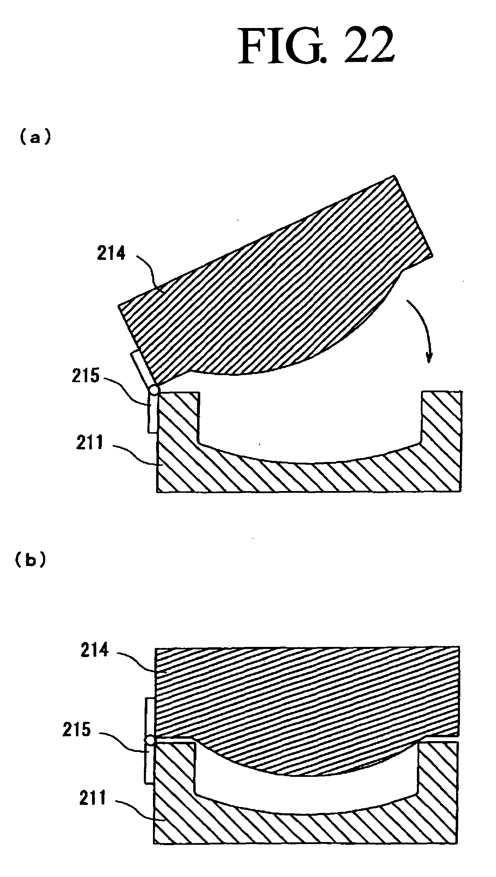

This embodiment incorporates a pantograph jack 15 to quickly apply a uniform pressure on a mold. However, if compression molding is achieved exploiting a pressure due to the heavier weight of a die placed upward, it may be possible to dispense with the use of a pantograph jack 15. For example, according to a molding system as shown in Fig. 21, a male die 114 is suspended with balancers 115 or the like each comprising a spring material, and compression molding is achieved by allowing the male die 114 to fall into the female die 111 due to its own weight as indicated by the arrows of the figure. Alternatively, the male die 214 may be connected via a hinge 215 to the female die 211 as shown in Fig. 22. The male die 214 is opened to a predetermined angle, a resin melt is poured into the cavity within the female die 211, the male die is moved as indicated by the arrow of the figure until it closes the cavity within the female die 211, and thus compression molding is achieved by exploiting the weight of the male die 214.

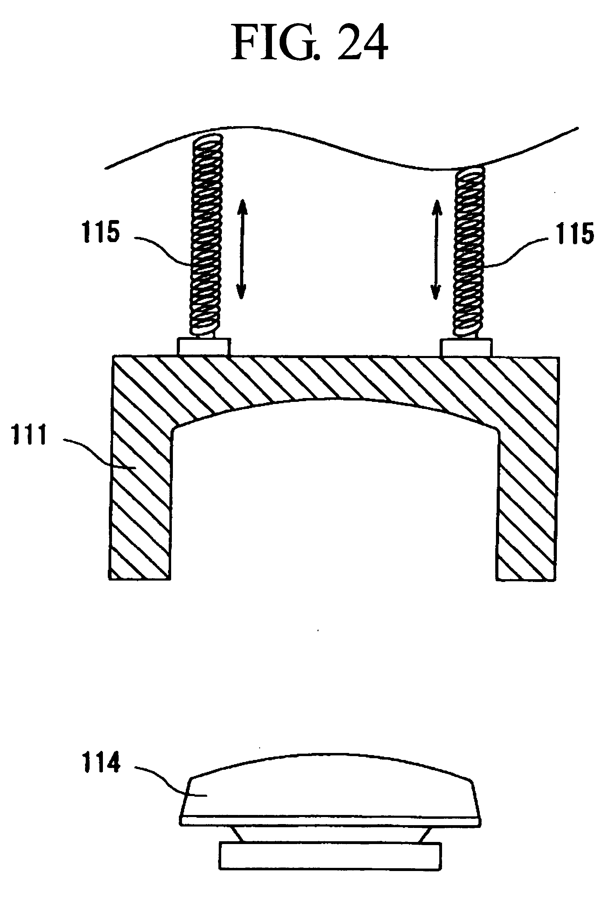

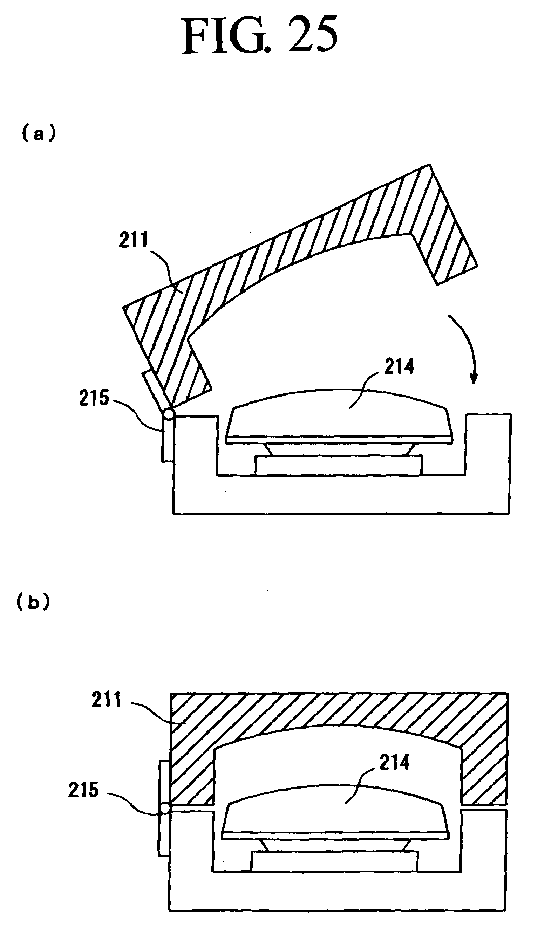

Figs. 24 to 26 concern with other embodiments. With the systems shown in those figures, vertical positioning of the female die and male die may be reversed. With the systems, the concrete female die 11 placed upwards serves as a weight during compression molding. If the apparatus comprises a female die 111 suspended with balancers 115 made of a spring material, compression molding may be achieved by allowing the female die 111 to engage with the male die 114 due to its own weight as indicated by the arrows of the figure. Alternatively, the male die 214 may be connected via a hinge 215 to the female die 211 as shown in Fig. 22. The male die 214 is opened to a predetermined angle, the male die is moved as indicated by the arrows of the figure until it closes the cavity within the female die, and thus compression molding is achieved by exploiting the weight of the female die 211 in mating with the male die 214.

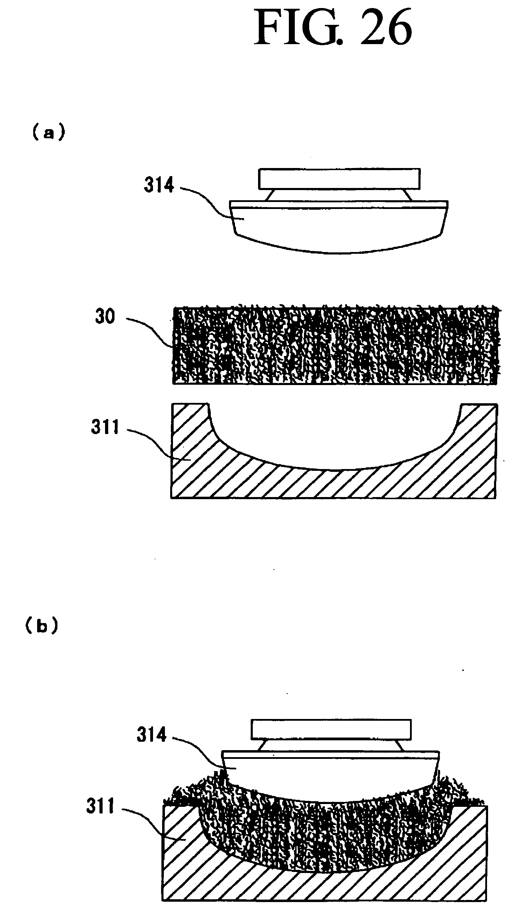

Although it was mentioned above that the female die 11 is preferably made of concrete, it is possible to utilize a conventional apparatus adapted for molding polyurethane foams as profitably as the apparatus of the invention if the dies are modified such that their trimming margins can be increased, and accommodate the expansion of a mold as a result of molding, as shown in Figs. 26a and 26b. For example, according to a conventional system, start resins (liquids) are poured into the cavity, and an upper die 314 and lower die 314 are mated to be closed and the resins are allowed to foam in the cavity (foaming as a result of the mixture of two resins). However, the apparatus may be modified as follows: a resin molded article 30 with a spring structure is placed in the cavity, the article is compressed by mating the two dies, and burrs protruded from the mating dies are removed via pressures generated as a result of intimate closure of the two mating dies. Then, it will be possible to obtain a cushion material 1 like the one representing an embodiment of the invention without resorting to a apparatus which incorporates concrete-made mating dies. Or, it is preferable to trim a mold with a heat cutter after the upper die has been removed. The mating dies 311, 314 of a conventional apparatus may be made from a metal such as iron. The die is preferably made from concrete or metal, but may be made from a complex synthetic resin material such as FRP.

As shown in Figs. 26a and 26b, it is possible to employ part (e.g., lower die 311) of a conventional apparatus. For example, according to a conventional apparatus, start resins (liquids) are poured into the cavity, and an upper die (not illustrated) and lower die 311 are mated to be closed and the resins are allowed to foam in the cavity (foaming as a result of the mixture of two resins). Instead, a resin molded article 30 with a spring structure is placed in a apparatus, and it may be compressed by mating a male die 314 with a lower die 311 equipped with a base 4.

The temperature of atmosphere or temperature control is important for compression molding. During molding, start resins soften and intermingle. However, the mixture does not occur at molecular levels because the resins do not melt completely. Thus the air masses entrapped in a mold are the same with those existent in the start resins. To properly form a mold, it is necessary for the temperature of the air masses to be equilibrated with the softening temperature of start resins. Otherwise, if the heightened temperature is abruptly reduced to a far low level, the air masses will expand which will cause spring-backs to impair proper molding, unless mating of the two dies is maintained so as to keep the equilibrium state.

Industrial Applicability

As described above, according to the invention, it is possible to quickly produce a cushion material constituted with a resin molded article with a spring structure which has desired resistances to imposed weight and impact. Mass production of such a cushion material is also possible. Since the production of such cushion materials is based on compression molding, it is possible to freely modify the size and shape of individual products. If the cushion material is expected to be exposed to vertical vibrations, horizontal vibrations or complex vibrations, it is possible to confer bulges and recesses on both sides of a cushion material such that the cushion material can effectively absorb vibrations as much as possible.

According to the method of the invention, since burrs are cut as well as fused with a heat cutter which is moved along the edges of a male mold during closure of the two mating dies, trimming is quite easy. Particularly, since trimming is introduced at this stage of molding, disintegration of open filaments at the edges is safely prevented, and renewed trimming and scaling subsequent to molding which would be otherwise required can be safely dispensed with, which reduces works required for after-molding treatment.

Further, since a base to which a resin molded article with a spring structure is attached also acts as a male die, it is necessary to prepare only a female die for proper molding which will lead to reduced production costs. Furthermore, since the product itself is utilized as an element of the molding apparatus, precision of molding will be improved.

Since it is possible using a molding apparatus incorporating a single pair of mating dies according to the invention to produce a cushion material in which some portions have a different thickness from that of other portions. Thus, with a single apparatus, it is possible to produce various cushion materials different in size, shape and density in accordance with individual requirements without resorting to multiple pairs of dies. More specifically, it is possible, when it is required to provide seats appropriate for the type of motorcycles, to provide seats whose thickness varies depending on the type (required suspension property) of the motorcycle. For example, according to the method of the invention, it is possible when it is required to provide thin cushion materials, to adjust the molding apparatus such that the stroke between the two mating dies becomes thin. Conversely, when it is required to provide thick cushion materials, it is only necessary to adjust the molding apparatus such that the stroke between the two mating dies becomes wide. Thus, it is possible to produce cushion materials in accordance with given personal orders, that is, to produce cushion materials finely meeting personal needs of individual customers.

Furthermore, according to the method of the invention, it is possible to readily produce cushion materials different in property including their thickness by simply adjusting the stroke interval between the two mating dies and choosing an appropriate material (e.g., in filament diameter, texture, bulk density and void ratio). More specifically, according to the method of the invention, it is possible with a single apparatus to produce various cushion materials different in size, shape and density in accordance with individual requirements without resorting to multiple pairs of dies. For example, it is possible, when it is required to provide seats appropriate for the type of motorcycles or automotive vehicles, to provide seats whose thickness varies depending on the type (required suspension property) of the motorcycle or automotive vehicle. Further, according to the method of the invention, it is possible to provide cushion materials in which the distribution of spring properties and rigidities is adjusted as desired by simply varying the stroke width between the two mating dies, without modifying the physical properties of the cushion material itself. For example, when a cushion material is used as a material of the seat of a motorcycle or automotive vehicle, it is possible to modify the cushion property of the cushion material in accordance with the type of motorcycle (for touring, road racing or motocross) without resorting to any complicated processes which would otherwise be required. If the cushion material is used as a material of the seat of a motorcycle for motocross, it may be prepared so as to absorb the weight of a rider. Then, the rider can steer the motorcycle while resting on the seat which will insure stability during riding.

If the cushion material comprises two or more layers of sheets, it is possible to readily alter the properties of the cushion material by choosing appropriate constitutive resin molded articles with a spring structure (in terms of, e.g., diameter of filaments, material, bulk density, void ratio, etc.) or by adjusting the stroke width between the two mating dies. For example, combination of spring properties between the overlying layer and underlying layer can be altered as desired without resorting to any complicated processes: it is quite easy to combine overlying and underlying layers having the same spring property, as well as to combine an overlying layer having a certain rigidity with an underlying layer having a lower rigidity. It is also possible to combine overlying layers with underlying layers such that there is formed a stepwise stroke between adjacent layers to thereby produce a central ridge.

Therefore, it is possible to provide seats that can finely meet given requirements such as product standards, functions, and individual customers' needs, which will leads to the increased value of the product. Thus, when the cushion material is used as a material of the seat of a motorcycle or automotive vehicle, it is possible to modify the seat in accordance with the type of the motorcycle or automotive vehicle, or the body form of the rider. To put it more specifically, if the seat is for a motorcycle or automotive vehicle whose user (e.g., professional driver) is strict about driving posture, it is possible to modify the seat in accordance with requirements from the user so that the seat can exactly fit to his driving posture and performance. If the cushion material is used as a material of the seat of a motorcycle for motocross, it may be prepared so as to absorb the weight of a rider. Then, the rider can steer the motorcycle while resting on the seat which will insure stability during riding.

According to the method of the invention, cushion materials are more easily produced than polyurethane foams undergoing secondary processing according to the conventional method. Although in manufacturing a polyurethane foam, toxic materials such as TDI and the like are used, a resin molded article of the present invention can be produced without generating toxic gases and hence insures good working conditions.

According to the method of the invention, resins such as PE or the like may be recycled into edible oil containers of thermoplastic resins or biodegradable plastic films for agricultural use with an additional merit added. Cushion materials made of a resin molded article with a spring structure themselves may be repeatedly recycled by melting used cushion materials and submitting the melt again to molding process. The resin molded article according to the invention is so excellent in recyclability that it will not act as an undue load to environments even if it must be disposed of after use. Further, the resin molded article according to the invention can be manufactured at reduced costs since recycled resins can be used for producing the same.

The cushion material of the invention made of a resin molded article with a spring structure is highly durable and resistant to collapsing even after prolonged use, has a very small quantity of local sinking, and does not give a feeling of touching a hard bottom, and vertical swing. Moreover, the cushion material, when a user sits on it, uniformly receives the weight of the user on a whole region in contact with the cushion structure. Hence, the cushion material causes less fatigue of the user than a polyurethane foam-made cushion, and makes the user feel more relaxed. Thus, the cushion material of the invention can give a characteristic relaxed feeling to the user that can hardly be obtained from a polyurethane foam-made cushion.

The cushion material of the invention made of a resin molded article with a spring structure has such an excellent spring property that, when it is used as a material of the seat of an automotive vehicle or motorcycle, it will dispense with the use of coil springs which have been installed beneath the conventional seat of an automotive vehicle or motorcycle to absorb kick-backs from the road surface which would be otherwise a nuisance to the driver. This simplifies the structure of the seat, and lowers the center of gravity, which helps to stabilize the vehicle or motorcycle during running.

Since the resin molded article of the invention has a structure having completely continuous voids, it is so excellent in air permeability that it does not keep extra moisture. if cooled or warmed air transmitted through a duct from an air conditioner is permitted to pass through the cushion material of the seat of motorcycle, the rider can cool or warm his body during riding. Since the cushion material is resistant to water and will not degenerate when soaked with water, it may be profitably used as a material of the seat of a motorcycle. The cushion material may be washed with water, and will readily dry even when washed with water.

As described above, the method of the invention for producing a cushion material composed of a resin molded article having a spring structure is suitably used for providing a cushion material composed of a resin molded article with a spring structure, that is, a material suitably used as a supportive element of any supports on which one can sit, rest or mount such as seats of automotive vehicles, motor cycles, bicycles, electric trains, and aircraft, saddles for horse riding, chairs, sofas and beds, regardless of whether the seat is exposed to vibrations or not as a substitute for a conventional polyurethane foam-made cushion material.

If the cushion material is used as a supportive element of a seat which is expected to receive no vibrations during use, it is only necessary to subject one surface of the cushion material to compression molding. On the contrary, if the cushion material is used as a supportive element of a seat which is expected to receive vigorous vibrations during use, for example, the seat of an automotive vehicle or motorcycle, it is preferable to overlap two or more cushion materials each comprising kilted resin molded article with a spring structure.

If the molding apparatus uses, for compression molding, a pantograph jack instead of a hydraulic unit, the apparatus can have a simpler structure which will reduce production costs. Moreover, with this apparatus, it is easier to adjust the stroke width between mating dies.

The embodiments of the present invention are not limited to those described above, but may permit many variations and modifications within the technical scope of the invention. Also, since certain changes may be made in the above construction without departing from the scope of the invention, it is intended that any variations of and equivalents

## EP 1 665 957 B1

to the foregoing embodiments shall be interpreted as included in the technical scope of the invention.

Thus, the broadest claims that follow are not directed to a machine that is configuration a specific way. Instead, said broadest claims are intended to protect the heart or essence of this breakthrough invention. This invention is clearly new and useful. Moreover, it was not obvious to those of ordinary skill in the art at the time it was made, in view of the prior art when considered as a whole.

Moreover, in view of the revolutionary nature of this invention, it is clearly a pioneering invention. As such, the claims that follow are entitled to very broad interpretation as to protect the heart of this invention, as a matter of law.

It will thus be seen that the objects set forth above, and those made apparent from the foregoing description, are efficiently attained. Also, since certain changes may be made in the above construction without departing from the scope of the invention, it is intended that all matters contained in the foregoing description or shown in the accompanying drawings shall be interpreted as illustrative and not in a limiting sense.

It is also to be understood that the following claims are intended to cover all of the generic and specific features of the invention herein described, and all statements of the scope of the invention which, as a matter of language, might be said to fall therebetween. Now that the invention has been described; Reference Numerals

1: cushion material
2: overlying sheet
3: underlying sheet
4: base
5: vinyl leather
10: motorcycle
11: female die
12: cavity
13: hot water feeding device
14: male die
15: pantograph jack
16: heat cutter
20: extruder
21: hopper
22: molding die
23: winder
24: take-off rolls
25: bath
26: take-up rolls
27: cutting device
30: resin molded article with a spring structure
31: filament
32: burr

### Claims

1. A cushion material composed of a resin molded article having a spring structure comprising a three-dimensional structures with voids at a predetermined bulk density comprising a single-layered structure or obtained by overlapping two or more layers having a same or different spring property, wherein:

    the three-dimensional structure is formed by contacting, entwining, and gathering adjacent ones of random loops or curls of solid-and/or hollow continuous and/or short filaments made from a thermoplastic resin; and
    a male die consisted of a base which forms a part of the product is inserted in a female die by a length of a predetermined stroke, then the three-dimensional structure is compressed to a thickness corresponding to the length of the stroke of the male-die inserted in the female-die, and allowed to harden by cooling.

2. A cushion material as described in Claim 1 wherein the spring property is determined by the density, material and/or filament diameter of the three-dimensional structure.

3. A cushion material as described in Claim 1 or 2, wherein:
the three-dimensional structure has, on both its top and bottom surfaces, two or more bulges formed on predetermined linear areas by stitching the boundaries of each area using a thread of a thermoplastic resin, and shortening the thread by pressure.

4. A method for producing a cushion material composed of a resin molded article having a spring structure comprising a three-dimensional structure with voids at a predetermined bulk density comprising a single-lavered structures or obtained by overlapping two or more lavers having a same or different spring property, comprising the steps of:

forming the three-dimensional structure by contacting, entwining, and gathering adjacent ones of random loops or curls of solid and/or hollow continuous filaments and/or short filaments made from a thermoplastic resin; placing the three-dimensional structure in a female die:

heating a male die or the female die, or the female die and/or the three-dimensional structure to a temperature sufficiently high to soften the three-dimensional structure; setting a volume of a cavity of the female-die so that a length of a stroke including at least the longest stroke of the male-die when the male-die is entered into the cavity to a deep level, and adjusting a thickness of the three-dimensional structures by inserting the male die consisted of a base which forms a part of the product in the female die by an optional length equal to or shorter than the length of the longest stroke: compressing the three-dimensional structure to a thickness corresponding to the length of the stroke of the male-die which is inserted in the female-die; and hardening the three-dimensional structure by cooling.

5. A method as described in Claim 4 wherein:

superfluous edges of the three-dimensional structure protruded outside between the two mating dies are cut with a heat cutter so that the edges are cut out and open ends of edge filaments are fused together.

6. A method as described in Claim 4 or 5, wherein the female die is obtained by preparing a framework according to a master female die effective for molding a resin molded article with a spring structure, pouring concrete paste into the space within the framework, and allowing the concrete paste to harden.

7. A method as described in any one of Claims 4 to 6 wherein the vertical movement of at least one of the two mating dies is achieved by a pantograph jack.

8. A method as described in any one of Claims 4 to 7, comprising the steps of:

cutting the periphery of the three-dimensional structure or a resin molded article with a spring structure to give a U- or V-shaped profile, and stitching the thus formed edges with a thread of a thermoplastic resin; and stitching with a thread of a thermoplastic resin the boundaries of predetermined linear areas on the top and bottom surfaces of the three-dimensional structure.

9. A method as described in any one of Claims 4 to 8 , comprising the steps of:

cooling the three-dimensional structure to confer a constant spring property thereto.

**Patentansprüche**

1. Polstermaterial gebildet aus einem aus Harz geformten Artikel mit einer Federstruktur, umfassend eine dreidimensionale Struktur mit Hohlräumen und einer vorgegebenen Raumdichte, umfassend eine Einzelschichtstruktur oder erhalten durch übereinander legen zweier oder mehrerer Schichten mit den gleichen oder unterschiedlichen Federeigenschaften, wobei:

die dreidimensionale Struktur gebildet wird durch in Kontakt bringen, umeinander schlingen und sammeln benachbarter zufällig angeordneter Schlingen oder Schlaufen von massiven und/oder hohlen endlosen und/oder kurzen Filamenten aus einem thermoplastischen Harz; und wobei eine männliche Form bestehend aus einer Basis, die einen Teil des Produkts bildet in eine weibliche Form eingesetzt wird über die Länge eines vorgegebenen Hubs, dann die dreidimensionale Struktur komprimiert wird auf eine Dicke entsprechend der Länge des Hubs der in die weibliche Form eingesetzten männlichen Form und man diese dann durch Kühlen erhärten lässt.

2. Polstermaterial nach Anspruch 1, bei dem die Federeigenschaft bestimmt wird über die Dichte, das Material und/oder den Durchmesser des Filaments der dreidimensionalen Struktur.

3. Polstermaterial nach Anspruch 1 oder 2, wobei
die dreidimensionale Struktur an ihrer oberen und an ihrer unteren Fläche zwei oder mehrere Wölbungen aufweist, die in vorgegebenen linearen Bereichen durch Nähen der Ränder jedes Bereichs mit einem Faden aus einem thermoplastischen Harz und Verkürzen des Fadens mittels Druck gebildet sind.

4. Verfahren zur Herstellung eines Polstermaterials gebildet aus einem aus Harz geformten Artikel mit einer Federstruktur, umfassend eine dreidimensionale Struktur mit Hohlräumen und einer vorgegebenen Raumdichte, umfassend eine Einzelschichtstruktur oder erhalten durch übereinander legen zweier oder mehrerer Schichten mit den gleichen oder unterschiedlichen Federeigenschaften, umfassend die Schritte:

Bilden der dreidimensionalen Struktur durch in Kontakt bringen, umeinander schlingen und sammeln benachbarter zufällig angeordneter Schlingen oder Schlaufen von massiven und/oder hohlen endlosen und/oder kurzen Filamenten aus einem thermoplastischen Harz;
Einlegen der dreidimensionalen Struktur in eine weibliche Form;
Erwärmen einer männlichen Form oder der weiblichen Form, oder der weiblichen Form und/oder der dreidimensionalen Struktur auf eine Temperatur, die ausreichend hoch ist, um die dreidimensionale Struktur zu erweichen;
Setzen eines Volumens einer Kavität der weiblichen Form auf eine Hublänge umfassend wenigstens den größten Hub der männlichen Form, wenn die männliche Form auf einem tiefen Niveau in die Kavität eingebracht wird, und Einstellen einer Dicke der dreidimensionalen Struktur durch Einsetzen der männlichen Form bestehend aus einer Basis, die einen Teil des Produkts bildet, in die weibliche Form mit einer optionalen Länge, die gleich oder kürzer ist als die Länge des größten Hubs;
Komprimieren der dreidimensionalen Struktur auf eine Dicke entsprechend der Hublänge der männlichen Form, die in die weibliche Form eingesetzt ist; und Aushärten der dreidimensionalen Struktur durch Kühlen.

5. Verfahren nach Anspruch 4, bei dem:

überflüssige Kanten der dreidimensionalen Struktur, die außen vorstehen zwischen den beiden paarigen Formen, mit einem Hitzeschneider geschnitten werden, so dass die Kanten ausgeschnitten werden und offene Enden der Filamente an den Kanten miteinander verschmolzen werden.

6. Verfahren nach Anspruch 4 oder 5, bei dem die weibliche Form erhalten wird durch Herstellen eines Gerüsts entsprechend einer weiblichen Modellform, geeignet zum Formen eines aus Harz geformten Artikels mit einer Federstruktur, Gießen einer Betonpaste in den Raum innerhalb des Gerüsts und Aushärten lassen der Betonpaste.

7. Verfahren nach einem der Ansprüche 4 bis 6, bei dem die vertikale Bewegung wenigstens einer der beiden paarigen Formen mittels einer Scherenhubvorrichtung erzielt wird.

8. Verfahren nach einem der Ansprüche 4 bis 7, umfassend die Schritte:

Schneiden der Peripherie der dreidimensionalen Struktur oder eines aus Harz geformten Artikels mit einer Federstruktur zu einem U- oder V-Profil, und Nähen der so geformten Kanten mit einem Garn aus einem thermoplastischen Harz; und
Nähen der Ränder von vorgegebenen linearen Bereichen an der oberen und an der unteren Fläche der dreidimensionalen Struktur mit einem Faden aus einem thermoplastischen Harz.

9. Verfahren nach einem der Ansprüche 4 bis 8, umfassend den Schritt:

Kühlen der dreidimensionalen Struktur, um dieser eine konstante Federeigenschaft zu verleihen.

**Revendications**

1. Matériau de rembourrage composé d'un article moulé en résine ayant une structure à ressort comprenant une structure tridimensionnelle avec des vides à une densité apparente prédéterminée comprenant une structure monocouche ou obtenue par chevauchement de deux couches ou plus ayant une propriété de ressort identique ou différente, dans lequel :

   la structure tridimensionnelle est formée par mise en contact, entrelacement et assemblage de boucles adjacentes parmi des boucles aléatoires de filaments continus et/ou courts solides et/ou creux constitués d'une résine thermoplastique ; et
   un moule positif constitué d'une base qui forme une partie du produit est inséré dans un moule négatif d'une longueur d'une course prédéterminée, puis la structure tridimensionnelle est comprimée à une épaisseur correspondant à la longueur de la course du moule positif inséré dans le moule négatif, et on la laisse durcir par refroidissement.

2. Matériau de rembourrage selon la revendication 1, dans lequel la propriété de ressort est déterminée par la densité, le matériau et/ou le diamètre de filament de la structure tridimensionnelle.

3. Matériau de rembourrage selon la revendication 1 ou 2, dans lequel :

   la structure tridimensionnelle a, à la fois sur ses surfaces supérieure et inférieure, deux bosses ou plus formées sur des zones linéaires prédéterminées en cousant les limites de chaque zone en utilisant un fil d'une résine thermoplastique, et en raccourcissant le fil par pression.

4. Procédé de production d'un matériau de rembourrage composé d'un article moulé en résine ayant une structure à ressort comprenant une structure tridimensionnelle avec des vides à une densité apparente prédéterminée comprenant une structure monocouche ou obtenue par chevauchement de deux couches ou plus et ayant une propriété de ressort identique ou différente, comprenant les étapes consistant à :

   former la structure tridimensionnelle par mise en contact, entrelacement et assemblage de boucles adjacentes parmi des boucles aléatoires de filaments continus et/ou filaments courts solides et/ou creux constitués d'une résine thermoplastique ;
   placer la structure tridimensionnelle dans un moule négatif ;
   chauffer un moule positif ou le moule négatif, ou le moule négatif et/ou la structure tridimensionnelle à une température suffisamment élevée pour ramollir la structure tridimensionnelle ;
   établir un volume d'une cavité du moule négatif de sorte qu'une longueur d'une course comprend au moins la course la plus longue du moule positif lorsque le moule positif est entré dans la cavité à un niveau profond, et ajuster une épaisseur de la structure tridimensionnelle en insérant le moule positif constitué d'une base qui forme une partie du produit dans le moule négatif d'une longueur facultative égale ou plus courte que la longueur de la course la plus longue ;
   comprimer la structure tridimensionnelle à une épaisseur correspondant à la longueur de la course du moule positif qui est inséré dans le moule négatif; et
   durcir la structure tridimensionnelle par refroidissement.

5. Procédé selon la revendication 4, dans lequel :

   des bords superflus de la structure tridimensionnelle faisant saillie vers l'extérieur entre les deux matrices d'accouplement sont découpés avec un dispositif de coupe à la chaleur de sorte que les bords sont découpés et des extrémités ouvertes des filaments de bord sont fusionnées ensemble.

6. Procédé selon la revendication 4 ou 5, dans lequel le moule négatif est obtenu en préparant une structure selon un moule négatif maître efficace pour mouler un article moulé en résine avec une structure à ressort, en versant une pâte de béton dans l'espace dans la structure, et en laissant la pâte de béton durcir.

7. Procédé selon l'une quelconque des revendications 4 à 6, dans lequel le mouvement vertical d'au moins l'une des deux matrices d'accouplement est obtenu par un cric en forme de pantographe.

8. Procédé selon l'une quelconque des revendications 4 à 7, comprenant les étapes consistant à :

découper la périphérie de la structure tridimensionnelle ou un article moulé en résine avec une structure à ressort pour donner un profil en forme de U ou de V, et coudre les bords ainsi formés avec un fil d'une résine thermoplastique ; et
coudre avec un fil d'une résine thermoplastique les limites de zones linéaires prédéterminées sur les surfaces supérieure et inférieure de la structure tridimensionnelle.

9. Procédé selon l'une quelconque des revendications 4 à 8, comprenant l'étape consistant à :

refroidir la structure tridimensionnelle pour conférer une propriété de ressort constante à celle-ci.

# FIG. 1

# FIG. 2

(a)

(b)

# FIG. 3

EP 1 665 957 B1

# FIG. 4

(a)

(b)

# FIG. 5

# FIG. 6

# FIG. 7

# FIG. 8

# FIG. 9

**D**

32

14

16

14 32

11

# FIG. 10

# FIG. 11

Method 1

VAC or EVA or SBS

polyolefin resin

dry-blend

blended resin

to an extruder 20

Method 2

VAC or EVA or SBS

polyolefin resin

a metering feeder

a metering feeder

to an extruder 20

Method 3

VAC or EVA or SBS

polyolefin resin

melted and mixed to form pellets

to an extruder 20

31

# FIG. 12

# FIG. 13

EP 1 665 957 B1

# FIG. 14

EP 1 665 957 B1

# FIG. 15

(a)

(b)

(c)

# FIG. 16

(a)

430  430a  430b  430c

(b)

530  530a  530a

(c)

530  530b  530b

# FIG. 17

(a)

622b    622a    622

(b)

622

31    631    31

# FIG. 18

(a)

(b)

(c)

# FIG. 19

(a)

(b)

# FIG. 20

(a)

(b)

# FIG. 22

(a)

214
215
211

(b)

214
215
211

# FIG. 23

(a)

314

30

311

(b)

314

311

# FIG. 24

# FIG. 25

(a)

(b)

EP 1 665 957 B1

# FIG. 26

(a)

314

30

311

(b)

314

311

46

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5492662 A
- JP 2995325 B
- JP 2548477 B
- JP 2000051011 A
- EP 001182826 A1